(19) Europäisches Patentamt
European Patent Office
Office européen des brevets

(11) **EP 4 773 672 A1**

(12) **EUROPEAN PATENT APPLICATION**
published in accordance with Art. 153(4) EPC

(43) Date of publication:
08.07.2026 Bulletin 2026/28

(21) Application number: 23950194.3

(22) Date of filing: 31.08.2023

(51) International Patent Classification (IPC):
*H04W 36/08* (2009.01)

(52) Cooperative Patent Classification (CPC):
H04B 7/18513; H04B 7/185; H04B 7/18541;
H04B 17/309; H04W 4/02; H04W 24/10;
H04W 36/0055; H04W 36/326; H04W 52/367;
H04W 36/302; H04W 84/06

(86) International application number:
PCT/CN2023/116146

(87) International publication number:
WO 2025/043609 (06.03.2025 Gazette 2025/10)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Quectel Wireless Solutions Co., Ltd.
Shanghai 201601 (CN)**

(72) Inventors:
• LYU, Ling
Shanghai 201601 (CN)
• ZHAO, Zheng
Shanghai 201601 (CN)

(74) Representative: **Fish & Richardson P.C.
Highlight Business Towers
Mies-van-der-Rohe-Straße 8
80807 München (DE)**

(54) **METHODS FOR NON-TERRESTRIAL NETWORK SATELLITE HANDOVER, TERMINAL DEVICE AND NETWORK DEVICES**

(57) The present application provides a satellite handover method, terminal device, and network device for a non-terrestrial network (NTN), which helps to improve the access success rate of RACH-less handover in NTN cells. The method is applicable to satellite handover from a coverage area of a first satellite network to a coverage area of a second satellite network, and includes: receiving a first handover instruction, where the first handover instruction includes power-related information within the coverage area of the second satellite network and/or relative position information between a second satellite corresponding to the second satellite network and a terminal device; and determining, according to the first handover instruction, a first power of uplink transmission to the second satellite network.

Fig. 4

## Description

### TECHNICAL FIELD

The present application relates to the technical field of communication, and more specifically, to a satellite handover method, terminal device, and network device for a non-terrestrial network.

### BACKGROUND

To enhance user experience and reduce the delay of a terminal device performing a handover from a source cell to a target cell, random access channel-less (RACH-less) handover has been developed.

However, in certain communication systems (such as non-terrestrial network (NTN) systems), the transmission distance between terminal devices and network devices is relatively large. When performing RACH-less handover in these communication systems, how the terminal device determines the transmit power for uplink transmission to improve the handover success rate of the terminal device is an issue that needs to be addressed.

### SUMMARY

The present application provides a satellite handover method, terminal device, and network device for a non-terrestrial network. Various aspects involved in the embodiments of the present application are introduced in the following.

In a first aspect, a satellite handover method for a non-terrestrial network is provided, which is applicable to satellite handover from a coverage area of a first satellite network to a coverage area of a second satellite network. The method includes: receiving a first handover instruction, wherein the first handover instruction includes power-related information within the coverage area of the second satellite network and/or relative position information between a second satellite corresponding to the second satellite network and a terminal device; and determining, according to the first handover instruction, a first power of uplink transmission to the second satellite network.

In a second aspect, a satellite switching method for a non-terrestrial network is provided, which includes: applicable to satellite handover from a coverage area of a first satellite network to a coverage area of a second satellite network, wherein the method comprises: determining, according to a handover request acknowledge sent by the second satellite network, a first handover instruction, wherein the first handover instruction includes power-related information within the coverage area of the second satellite network and/or relative position information between a second satellite corresponding to the second satellite network and a terminal device; and transmitting the first handover instruction to the terminal device, wherein the first handover instruction is used for the terminal device to determine a first power of uplink transmission to the second satellite network.

In a third aspect, a satellite handover method for a non-terrestrial network is provided, which is applicable to satellite handover from a coverage area of a first satellite network to a coverage area of a second satellite network. The method includes: transmitting a handover request acknowledge to the first satellite network, wherein the handover request acknowledge is used for the first satellite network to determine a first handover instruction; wherein the first handover instruction comprises power-related information within the coverage area of the second satellite network and/or relative position information between a second satellite corresponding to the second satellite network and the terminal device, and the first handover instruction is used for the terminal device to determine a first power of uplink transmission to the second satellite network.

In a fourth aspect, a terminal device is provided, which includes: a receiving unit, configured to receive a first handover instruction, wherein the first handover instruction is used to instruct the terminal device to perform a satellite handover from a coverage area of a first satellite network to a coverage area of a second satellite network, wherein the first handover instruction comprises power-related information within the coverage area of the second satellite network and/or relative position information between a second satellite corresponding to the second satellite network and the terminal device; and a determining unit, configured to determine, according to the first handover instruction, a first power of uplink transmission to the second satellite network.

In a fifth aspect, a network device is provided. The network device is a network device corresponding to a first satellite network, and includes: a determining unit, configured to determine a first handover instruction according to a handover request acknowledge sent by a second satellite network, wherein the first handover instruction is used to instruct a terminal device to perform a satellite handover from a coverage area of the first satellite network to a coverage area of the second satellite network, wherein the first handover instruction comprises power-related information within the coverage area of the second satellite network and/or relative position information between a second satellite corresponding to the second satellite network and the terminal device; and a transmitting unit, configured to transmit the first handover instruction to the terminal device, wherein the first handover instruction is used for the terminal device to determine a first power of uplink transmission to the second satellite network.

In a sixth aspect, a network device is provided. The network device is a network device corresponding to a second satellite network, and includes: a transmitting unit, configured to transmit a handover request acknowledge to a first satellite network, wherein the handover request acknowledge is used for the first satellite network to determine a first handover instruction, and the first handover instruction is used to instruct a terminal device to perform a satellite handover from a coverage area of the first satellite network to a coverage area of the second satellite network; wherein the first handover instruction comprises power-related information within the coverage area of the second satellite network and/or relative position information between a second satellite corresponding to the second satellite network and the terminal device, and the first handover instruction is used for the terminal device to determine a first power of uplink transmission to the second satellite network.

In a seventh aspect, a communication device is provided, which includes a memory and a processor, where the memory is configured to store a program, and the processor is configured to call the program in the memory to implement the method according to any one of the first to third aspects.

In an eighth aspect, a device is provided, which includes a processor for calling a program from a memory to implement the method according to any one of the first to third aspects.

In a ninth aspect, a chip is provided, which includes a processor for calling a program from a memory, such that a device equipped with the chip executes the method according to any one of the first to third aspects.

In a tenth aspect, a computer-readable storage medium is provided, on which a program is stored, where the program enables a computer to implement the method according to any one of the first to third aspects.

In an eleventh aspect, a computer program product is provided, comprising a program that enables a computer to implement the method according to any one of the first to third aspects.

In a twelfth aspect, a computer program is provided, which enables a computer to implement the method according to any one of the first to third aspects.

In the embodiments of the present application, the first handover instruction received by the terminal device includes power-related information within the coverage area of the second satellite network and/or relative position information between the terminal device and the second satellite corresponding to the second satellite network. The power-related information can serve as a reference for the terminal device to determine or adjust the first power. The relative position information can enhance the accuracy of path loss estimation by the terminal device. It can be seen that the relevant conditions in the second satellite network have been taken into account in the first power determined by the terminal device, thereby improving the access success rate of the terminal device to the second satellite network.

**BRIEF DESCRIPTION OF THE DRAWINGS**

Fig. 1 shows a wireless communication system to which the embodiments of the present application are applied.
Fig. 2 shows an NTN system to which the embodiments of the present application are applied.
Fig. 3 shows another NTN system to which the embodiments of the present application are applied.
Fig. 4 is a schematic flowchart of a satellite handover method for NTN provided in the embodiments of the present application.
Fig. 5 is a schematic diagram of an implementation method for determining handover path loss of a terminal device.
Fig. 6 is a schematic flowchart of another satellite handover method for NTN provided in the embodiments of the present application.
Fig. 7 is a schematic flowchart of a possible implementation of the method shown in Fig. 6.
Fig. 8 is a schematic flowchart of another possible implementation of the method shown in Fig. 6.
Fig. 9 is a schematic diagram of the structure of a terminal device provided in the embodiments of the present application.
Fig. 10 is a schematic diagram of the structure of a network device provided in the embodiments of the present application.
Fig. 11 is a schematic diagram of the structure of another network device provided in the embodiments of the present application.
Fig. 12 is a schematic diagram of the structure of another terminal device provided in the embodiments of the present application.
Fig. 13 is a schematic diagram of the structure of another network device provided in the embodiments of the present application.
Fig. 14 is a schematic diagram of the structure of another network device provided in the embodiments of the present application.
Fig. 15 is a schematic diagram of the structure of a communication device in the embodiments of the present application.

## DETAILED DESCRIPTION OF THE EMBODIMENTS

The technical solutions in the embodiments of the present application are described hereinafter in conjunction with the drawings in the embodiments of the present application. Apparently, the described embodiments are only a part of the embodiments of the present application, rather than all embodiments. For the embodiments described in the present application, all other embodiments obtained by those of ordinary skill in the art without creative efforts fall within the scope of protection of the present application.

The embodiments of the present application can be applied to various communication systems, such as: global system of mobile communication (GSM) systems, code division multiple access (CDMA) systems, wide band code division multiple access (WCDMA) systems, general packet radio service (GPRS), long term evolution (LTE) systems, advanced long term evolution (LTE-A) systems, new radio (NR) systems, evolved NR systems, LTE-based access to unlicensed spectrum (LTE-U) systems, NR-based access to unlicensed spectrum (NR-U) systems, NTN systems, universal mobile telecommunication system (UMTS), wireless local area networks (WLAN), wireless fidelity (WiFi), and 5th-generation (5G) communication systems. The embodiments of the present application can also be applied to other communication systems, such as future communication systems. The future communication systems may be, for example, 6th-generation (6G) mobile communication systems, or satellite communication systems.

Conventional communication systems support a limited number of connections and are easy to implement. However, with the development of communication technology, communication systems can not only support conventional cellular communication but also support one or more other types of communication. For example, a communication system can support one or more of the following types of communication: device to device (D2D) communication, machine to machine (M2M) communication, machine type communication (MTC), enhanced MTC (eMTC), vehicle to vehicle (V2V) communication, and vehicle to everything (V2X) communication. The embodiments of the present application can also be applied in communication systems supporting the aforementioned communication modes.

The communication system in the embodiments of the present application can be applied to carrier aggregation (CA) scenarios, dual connectivity (DC) scenarios, and standalone (SA) networking scenarios.

The communication system in the embodiments of the present application can be applied to unlicensed spectrum. The unlicensed spectrum may be considered as shared spectrum. Alternatively, the communication system in the embodiments of the present application can also be applied to licensed spectrum. The licensed spectrum may be considered as dedicated spectrum.

The embodiments of the present application can be applied to NTN systems. As an example, the NTN systems may include 4G-based NTN system, NR-based NTN system, internet of things (IoT)-based NTN system, and narrow band internet of things (NB-IoT)-based NTN system.

The communication system may include one or more terminal devices. The terminal device mentioned in the embodiments of the present application may also be referred to as user equipment (UE), access terminal, user unit, user station, mobile platform, mobile station (MS), mobile terminal (MT), remote station, remote terminal, mobile device, user terminal, terminal, wireless communication device, user agent or user device.

In some embodiments, the terminal device may be a station (ST) in WLAN. In some embodiments, the terminal device may be a cellular phone, cordless phone, session initiation protocol (SIP) phone, wireless local loop (WLL) station, personal digital assistant (PDA) device, handheld device with wireless communication function, computing device, or other processing device connected to a wireless modem, in-vehicle device, wearable device, terminal device in a next-generation communication system (such as NR system), or terminal device in a future-evolved public land mobile network (PLMN), etc.

In some embodiments, the terminal device may refer to a device that provides voice and/or data connectivity to a user. For example, the terminal device may be a handheld device or an in-vehicle device with wireless connectivity. As some specific examples, the terminal device may be mobile phones, tablets, laptops, palmtop computers, mobile internet devices (MID), wearable devices, virtual reality (VR) devices, augmented reality (AR) devices, wireless terminals in industrial control, wireless terminals in self-driving, wireless terminals in remote medical surgery, wireless terminals in smart grid, wireless terminals in transportation safety, wireless terminals in smart city, wireless terminals in smart home, etc.

In some embodiments, the terminal device may be deployed on land. For example, the terminal device may be deployed indoors or outdoors. In some embodiments, the terminal device may be deployed on the water surface, such as on a ship. In some embodiments, the terminal device may be deployed in the air, such as on airplanes, balloons, and satellites.

In addition to the terminal device, the communication system may further include one or more network devices. The network device in the embodiments of the present application may be a device configured for communication with the terminal device. The network device may also be referred to as an access network device or a radio access network device. For example, the network device may be a base station. The network device in the embodiments of the present application may refer to a radio access network (RAN) node (or device) that connects a terminal device to a radio network. The base station may broadly cover or be replaced with the following various names, such as: NodeB, evolved NodeB (eNB), next generation NodeB (gNB), relay station, access point, transmitting and receiving point (TRP), transmitting point (TP), master eNB (MeNB), secondary eNB (SeNB), multi-standard radio (MSR) node, home base station, network controller, access node, wireless node, access point (AP), transmission node, transceiver node, base band unit (BBU), remote radio unit (RRU), active antenna unit (AAU), remote radio head (RRH), central unit (CU), distributed unit (DU), positioning node, etc. The base station may be a macro base station, a micro base station, a relay node, a donor node, or the like, or a combination thereof. The base station may also refer to a communication module, modem, or chip configured to be installed within the aforementioned equipment or devices. The base station may also be a mobile switching center, a device that performs base station functions in D2D, V2X, and M2M communication, a network side device in 6G network, or a device that performs base station functions in future communication systems. The base station can support networks of the same or different access technologies. The embodiments of the present application impose no limitation on the specific technology and device form adopted by the network device.

The base station may be fixed or mobile. For example, a helicopters or drone can be configured to act as a mobile base station, and one or more cells can move according to the location of the mobile base station. In other examples, a helicopter or drone can be configured as a device for communication with another base station.

In some deployments, the network device in the embodiments of the present application may refer to CU or DU, or the network device includes CU and DU. gNB may also include AAU.

By way of example and not limitation, in the embodiments of the present application, the network device may have mobility characteristics. For example, the network device may be a mobile device. In some embodiments of the present application, the network device may be a satellite or a balloon station. In some embodiments of the present application, the network device may also be a base station located on land, in water, or at other locations.

In the embodiments of the present application, the network device jay provide services for a cell, and the terminal device communicates with the network device through the transmission resources (such as frequency domain resources, or spectrum resources) used by the cell. The cell may be the cell corresponding to the network device (such as a base station), and the cell may belong to a macro base station or a base station corresponding to a small cell. The cell herein may include: metro cells, micro cells, pico cells, femto cells, etc. These small cells are characterized by their small coverage areas and low transmit power, making them suitable for providing high-speed data transmission services.

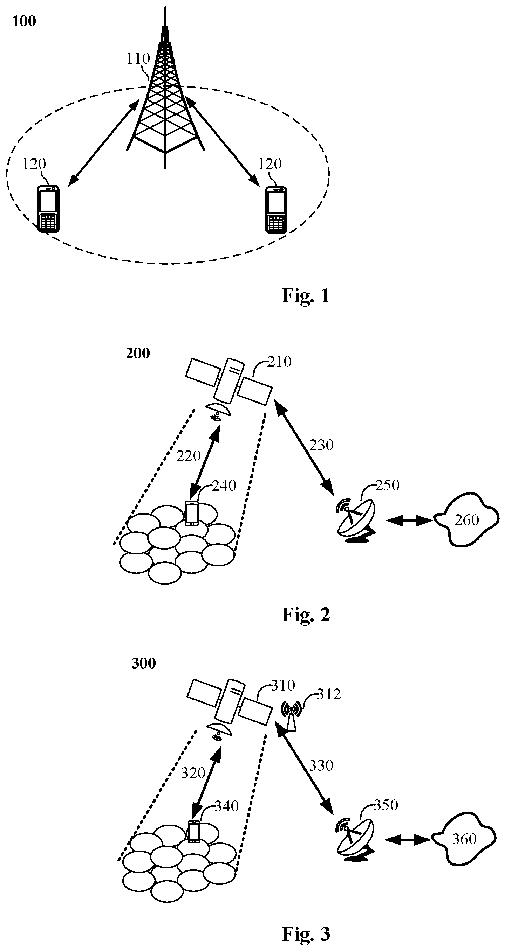

Illustratively, Fig. 1 is a schematic diagram of the architecture of a communication system provided in the embodiments of the present application. As shown in Fig. 1, a communication system 100 may include a network device 110 which may be a device that communicates with terminal devices 120 (also known as a communication terminal or terminal). The network device 110 can provide communication coverage for specific geographic areas and can communicate with the terminal devices located within this coverage area.

Fig. 1 illustrates one network device and two terminal devices by way of example. In some embodiments of the present application, the wireless communication system 100 may include multiple network devices and each network device's coverage area may include other numbers of terminal devices, which is not limited by the embodiments of the present application.

Illustratively, Fig. 2 is a schematic diagram of the architecture of an NTN system mentioned above. The NTN system 200 shown in Fig. 2 utilizes a satellite 210 as an aerial platform. As shown in Fig. 2, the satellite radio access network includes a satellite 210, a serving link 220, a feeder link 230, a terminal device 240, a gateway (GW) 250, and a network 260 including base stations and a core network.

The satellite 210 is a spacecraft based on a space platform. The serving link 220 refers to the link between the satellite 210 and the terminal device 240. The feeder link 230 refers to the link between the gateway 250 and the satellite 210. The earth-based gateway 250 connects the satellite 210 to the base station or core network, depending on the choice of architecture.

The NTN architecture depicted in Fig. 2 is a bent-pipe transponder architecture. In this architecture, the base station is located on earth behind the gateway 250, with the satellite 210 acting as a relay. The satellite 210 operates as a repeater, either forwarding signals from the feeder link 230 to the serving link 220, or forwarding signals from the serving link 220 to the feeder link 230. That is to say, the satellite 210 does not possess the function of a base station, and communication between the terminal device 240 and the base station in the network 260 needs to be relayed through the satellite 210.

Illustratively, Fig. 3 is a schematic diagram of another architecture of the NTN system. As shown in Fig. 3, the satellite radio access network 300 includes a satellite 310, a serving link 320, a feeder link 330, a terminal device 340, a gateway 350, and a network 360. Unlike Fig. 2, the satellite 310 is equipped with a base station 312, and the network 360 behind the gateway 350 only includes the core network.

The NTN architecture depicted in Fig. 3 is a regenerative transponder architecture. In this architecture, the satellite 310 carries the base station 312 and can be directly connected to the earth-based core network through a link. The satellite 310 possess the function of a base station, allowing the terminal device 340 to communicate directly with it. Therefore, the satellite 310 can be referred to as a network device.

The communication systems with the architectures shown in Figs. 2 and 3 may include multiple network devices, and each network device's coverage area may include other numbers of terminal devices, which is not limited by the embodiments of the present application.

In the embodiments of the present application, the communication system shown in Figs. 1 to 3 may further include other network entities such as a mobility management entity (MME) and an access and mobility management function (AMF), which is not limited in the embodiments of the present application.

It should be understood that, devices with communication functions in the network/system of the embodiments of the present application can be referred to as communication devices. Taking the communication system 100 shown in Fig. 1 as an example, the communication devices may include the network device 110 and the terminal device 120 with communication functions. The network device 110 and the terminal device 120 may be the specific devices mentioned above, which will not be further described herein. The communication devices may also include other devices in the communication system 100, such as network controllers, mobility management entities, and other network entities, which is not limited in the embodiments of the present application.

To facilitate understanding, some relevant technical knowledge related to the embodiments of the present application is firstly introduced. The following related technologies can be freely combined with the technical solutions of the embodiments of the present application as optional solutions, and all these combinations fall within the scope of protection of the embodiments of the present application. The embodiments of the present application include at least some of the following contents.

NTN system

With the development of communication technology, communication systems (such as 5G) integrate the market potential of satellites and terrestrial network infrastructures. For example, 5G standard has made NTN, including the satellite segment, a recognized part of the 5G connectivity infrastructure under the 3rd generation partnership project (3GPP).

NTN refers to a network or network segment that utilizes radio frequency (RF) resources on satellite or unmanned aerial system (UAS) platforms. Taking satellites as an example, communication satellites are categorized into low earth orbit (LEO) satellites, medium earth orbit (MEO) satellites, geostationary earth orbit (GEO) satellites, high elliptical orbit (HEO) satellites, etc., based on different orbital altitudes. LEO refers to an orbit centered around the earth, with an altitude of 2000 kilometers or below, or with at least 11.25 cycles per day and an eccentricity less than 0.25. Most of the man-made objects in outer space are located in LEO. LEO satellites orbit the earth at high speed (mobility), but in predictable or determined orbits.

Satellites with different orbital altitudes have different orbital periods.

LEO: The typical altitude thereof ranges from 250 to 1500 kilometers, with an orbital period of 90 to 120 minutes.

MEO: The typical altitude thereof ranges from 5000 to 25000 kilometers, with an orbital period of 3 to 120 hours.

GEO: The typical altitude thereof is about 35786 kilometers, with an orbital period of 24 hours.

As can be seen from Fig. 2 and Fig. 3, which use satellites as examples, typical scenarios for terminal devices accessing the NTN system involve NTN transparent payloads or NTN regenerative payloads. The bent-pipe transponder architecture shown in Fig. 2 corresponds to NTN transparent payloads, and the regenerative transponder architecture shown in Fig. 3 corresponds to NTN regenerative payloads.

In the NTN system, the propagation delay between terminal devices and network devices primarily depends on the altitude of the satellite-borne or airborne platform, as well as the type of payload in the NTN. Compared to the terrestrial network (TN), the propagation delay between terminal devices and network devices in the NTN system is much longer. For example, in cellular networks used by conventional NR, the propagation delay of terrestrial mobile systems is typically less than 1 millisecond, while the propagation delay of NTN systems ranges from several milliseconds to hundreds of milliseconds.

The NTN system possesses strong mobility, and aerial platforms such as satellites cover a large area. Terminal devices need to perform cell switching in a timely manner to maintain stable communication. For brevity, the following description uses satellites as an example for illustration.

In the NTN system, as satellites move, the terminal device needs to perform a satellite handover from a source NTN satellite (NTN1) to a target NTN satellite (NTN2). During the handover, the terminal device typically initiates two timers to enhance timing relationships. These two timers are timer T304 and timer T430.

The terminal device initiates the timer T304 when it begins to perform the handover. During the handover, once the timer T304 expires, the terminal device initiates a radio resource control (RRC) connection re-establishment process towards the target NTN cell.

During the synchronization of downlink (DL) and uplink (UL), the terminal device initiates the timer T430. As described in the preceding text, the source satellite NTN1 moves relative to the terminal device on earth, thus posing an issue regarding the validity of the auxiliary information (NTN-config) of the source satellite NTN1. The timer T430 is configured for ensuring that the terminal device can continuously obtain valid auxiliary information from the source satellite NTN1. For example, the terminal device can be controlled to obtain valid always-on auxiliary information in system information block (SIB) 19 through the timer T430, so as to ensure that the auxiliary information obtained by the terminal device from the source NTN1 before the handover is completed remains valid.

The auxiliary information of the source satellite NTN1 includes, for example, satellite ephemeris and common timing advance (TA) parameters. For NTN1, the network side can broadcast ephemeris information and common TA parameters. For example, the SIB 19 may contain satellite auxiliary information for NTN access. Before connecting to NTN2, the terminal device possesses a valid global navigation satellite system (GNSS) location, satellite ephemeris information, and a common TA.

## RACH-less handover (HO)

When the source cell, target cell, and terminal device are synchronized, a RACH-less handover solution can be introduced to reduce handover delay and enhance user experience. In a synchronous network, it can be assumed that the subframe boundaries between the source cell and the target cell are aligned. Therefore, the terminal device can perform a handover from the source cell to the target cell at a time agreed upon by the three parties, eliminating the need for a random access process. For example, when the source cell, target cell, and terminal device are synchronized, the terminal device can perform a handover from the source cell to the target cell at a system frame number (SFN) agreed upon by the three parties, without requiring random access.

One of the main purposes of the random access channel (RACH) process during the handover is to obtain the TA of the target cell. In the case of RACH handover, the terminal device can obtain the TA of the target cell through the RACH process. In the absence of RACH process, when the source cell and the target cell are time-synchronized, the terminal device can obtain the TA of the target cell without explicit TA instructions.

Another purpose of the RACH process during the handover is to obtain uplink grant transmission. In the absence of RACH process in the target cell, it is required to allocate an uplink grant in the target cell. In some embodiments, for the initial UL transmission in RACH-less handover, pre-allocated grant in the RACH-less handover instruction is supported. That is to say, the target cell can perform pre-allocation through the uplink grant (UL-grant) in the handover instruction. The pre-allocated uplink grant can remain valid for a certain period of time, starting from the moment the terminal device achieves synchronization with the target cell. For example, during RACH-less handover in an NR terrestrial network, the propagation delay between terminal devices and network devices is relatively low. Based on the delay information transmitted by the terminal device and the network device, the target cell can appropriately configure the time-domain location of the uplink resources in the handover instruction, facilitating the terminal device to transmit the RRCReconfigurationComplete message (i.e., the handover completion message) when accessing the target cell.

For the initial UL transmission in RACH-less handover, it is required to support the pre-allocated grant in the RACH-less handover instruction. In the NTN system, whether the handover is performed within satellites with the same feeder link or within satellites with different feeder links, NTN RACH-less handover can be supported. Satellites with the same feeder link refer to those with the same gateway or network device (e.g., gNB).

In the RACH-less handover, due to the absence of RACH preamble transmission and random access response reception, the terminal device may set the initial transmit power to an inappropriate level due to erroneous estimation of path loss. Illustratively, when the terminal device receives information about UL grant, it may fall into a logical deadlock, resulting in a failed handover. For example, the terminal device has determined the UL grant, but due to low transmit power, the network device cannot receive the uplink transmission, resulting in frequent failure of response messages.

In the RACH-less handover, if the initial transmit power of the terminal device's uplink transmission directly references the power control rules for configuring the grant physical uplink shared channel (PUSCH), issues such as path loss uncertainty and inapplicability of power adjustment may arise.

Illustratively, in the RACH-less handover, the grant is either pre-allocated or dynamically granted, and the determination of path loss is unclear or inaccurate. In the NTN system, satellites are situated at great heights above the ground and cover vast areas. Inaccurate path loss estimation can significantly affect the power. In certain scenarios, if the two satellites in the handover are of different types and their heights above the ground vary significantly, these factors can also affect the accuracy of path loss estimation.

Illustratively, for power adjustment and power control adjustment of PUSCH, since the current standard has requirements such as "if the UE receives a random access response message in response to PRACH transmission", power adjustment and power control adjustment based on PRACH transmit power are not applicable to RACH-less handover.

In summary, when introducing RACH-less handover in NTN scenarios, the issue that needs to be addressed is how the terminal device determines the initial transmit power for uplink transmission in the pre-allocated resources to improve the success rate of handover access of the terminal device.

It should be noted that the issue mentioned above that the introduction of RACH-less handover in the NTN system results in improper transmit power due to uncertain path loss and the inability to trigger power control adjustments through PRACH, is merely an example. The embodiments of the present application can be applied to any type of handover scenario where there is uncertain path loss in transmit power or where power adjustments cannot be triggered.

To address the issue mentioned above, the embodiments of the present application propose a satellite handover method for NTN. In this method, the first handover instruction includes power-related information within the coverage area of the second satellite network and/or relative position information between the network device corresponding to the second satellite network and the terminal device, so as to facilitate the terminal device to determine the first power of uplink transmission to the second satellite network. It can be seen that the communication or location conditions of the second satellite network have been taken into account in the first power, which helps to improve the accuracy of the first power, thereby improving the handover success rate.

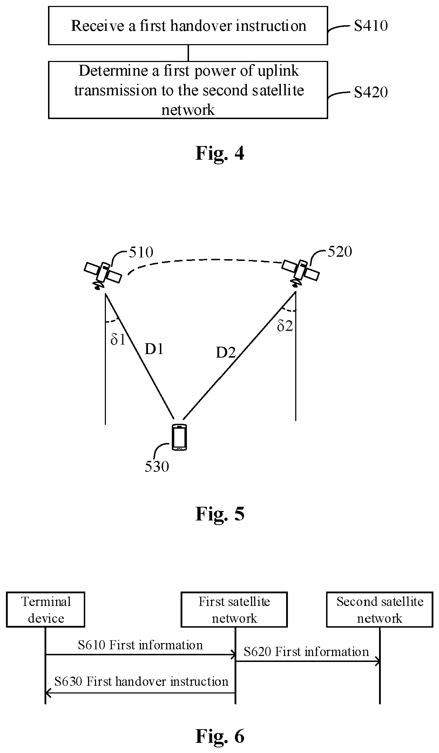

To facilitate understanding, a method proposed in the embodiments of the present application is described in detail below with reference to Fig. 4. The method shown in Fig. 4 is implemented by a terminal device. The method shown in Fig. 4 is used for satellite handover from a coverage area of a first satellite network to a coverage area of a second satellite network.

The terminal device can be any type of the terminal devices mentioned above. In some embodiments, the terminal device is a communication device for which the satellites provide services in the NTN system. In some embodiments, the terminal device is a communication device with a relatively low service transmission rate.

The first satellite network and the second satellite network are NTN networks that integrate ground facilities, satellites and other aerial platforms. As mentioned above, air platforms such as satellites in the first and second satellite networks can serve as network devices to provide services, or act as relays. Taking satellites as an example, the network devices corresponding to the first satellite network and the second satellite network may be either satellites or base stations on earth. For brevity, the satellite corresponding to the first satellite network can be referred to as the first satellite, and the satellite corresponding to the second satellite network can be referred to as the second satellite. The network device corresponding to the first satellite network can be referred to as the first network device, and the network device corresponding to the second satellite network can be referred to as the second network device.

The first satellite network is the NTN network serving the terminal device at the current moment. The first satellite network may also be referred to as source NTN, or source satellite network. In some embodiments, the first satellite network provides services to the terminal device within its coverage area through its corresponding network device.

The network device corresponding to the first satellite network is a communication device serving the terminal device at the current moment. In some embodiments, the network device may be a device that moves relative to the terminal device. For example, the first network device may be a base station on a satellite that provides services for the terminal device. For another example, the first network device may be a base station installed on a low-altitude aircraft. In some embodiments, the network device may be a device that is relatively stationary with respect to the terminal device or the earth. For example, when the satellite in the first satellite network serves as a relay, the first network device may be a base station on earth that communicates with the satellite through a gateway.

The coverage area of the first satellite network refers to the area where the first satellite network provides communication services. In certain scenarios, the coverage area of the first satellite network may also be referred to as the source cell. In some embodiments, the coverage area of the first satellite network may include one or more terrestrial network cells.

The second satellite network is an NTN network that provides services for the terminal device after the first satellite network. The second satellite network may also be referred to as target NTN, or target satellite network. In some embodiments, the second satellite network provides services to the terminal device within its coverage area through its corresponding network device. In some embodiments, the first satellite network can determine multiple satellite networks that can provide services for the terminal device based on satellite motion trajectories and/or ephemeris information, and determine a second satellite network. In some embodiments, the terminal device can determine the second satellite network among multiple candidates through signal measurement.

The network device corresponding to the second satellite network is a communication device serving the terminal device at the following moment. In some embodiments, the second network device may be a device that moves relative to the terminal device, or a device that remains stationary relative to the terminal device or to the earth, which will not be further described here.

The coverage area of the second satellite network refers to the area where the second satellite network provides communication services. In certain scenarios, the coverage area of the second satellite network may also be referred to as the target cell. In some embodiments, the coverage area of the second satellite network may include one or more terrestrial network cells.

Satellite handover may refer to the handover of the satellite corresponding to the area where the terminal device is located. Illustratively, satellite handover may be cell handover. Illustratively, the physical cell identity (PCI) of the coverage area during satellite handover can remain unchanged.

Referring to Fig. 4, in step S410, a first handover instruction is received.

The first handover instruction received by the terminal device originates from the first satellite network. The first satellite network can determine the first handover instruction based on a handover request acknowledge sent by the second satellite network.

The first handover instruction may be used to determine the first power of the terminal device to perform uplink transmission to the second satellite network. In some embodiments, the first handover instruction may be a RACH-less handover instruction. In some embodiments, the first handover instruction may be a handover instruction for other handover methods without random access response.

The uplink transmission from the terminal device to the second satellite network can either be the initial uplink transmission mentioned above or other uplink transmissions from the terminal device to the second satellite network. Illustratively, the uplink transmission is a PUSCH transmission.

The uplink transmission may be carried out on the first resource pre-configured in the second satellite network. In some embodiments, for PUSCH transmissions with reserved resources in RACH-less handover, a synchronization signal block (SSB) or a synchronization signal and PBCH block (SS/PBCH block) can be associated with the initial PUSCH transmission. That is to say, for pre-allocated initial PUSCH transmissions, the SSB can be determined before the PUSCH resources are determined. For brevity, SSB in the following text can represent either a synchronization signal block or a synchronization signal and PBCH block.

The first power can either be the transmit power of the terminal device for transmitting the initial uplink transmission, or the initial transmit power of the terminal device for communicating with the second satellite network. As can be inferred from the above, in NTN, if the terminal device does not perform the random access process during handover, there is no random access response as a reference when determining the first power, and issues such as inaccurate path loss estimation or unreasonable power adjustment may arise. Therefore, the first handover instruction can include relevant information for the terminal device to determine the initial transmit power, so as to improve the accuracy of path loss estimation and/or the rationality of power adjustment.

To improve the accuracy of the first power, the first handover instruction may include power-related information within the coverage area of the second satellite network, and/or relative position information between the second satellite corresponding to the second satellite network and the terminal device. Information related to the communication parameters within the coverage area of the second satellite network can be carried in the handover request acknowledge sent by the second satellite network.

The power-related information within the coverage area of the second satellite network can represent the power parameters for the second satellite network to communicate with the terminal device within the area. When the terminal device determines the first power based on these power parameters, it can obtain a power value that is more suitable for accessing the second satellite network, thereby improving the access success rate.

In some embodiments, the power-related information within the coverage area of the second satellite network may include one or more of the following parameters: average value of signal quality of some or all of the uplink beams for access within the coverage area; maximum value of signal quality of some or all of the uplink beams for access within the coverage area; transmit power of at least some of the terminal devices already accessed within the area for transmitting the random access uplink channels; average value of admission power of terminal devices other than the terminal device in the second satellite network; maximum value of admission power of terminal devices other than the terminal device in the second satellite network; average path loss within the coverage area of the second satellite network; and maximum path loss within the coverage area of the second satellite network.

Illustratively, the power-related information may also include the signal quality of the beams associated with the RACH-less handover.

Illustratively, the signal quality may be one or more of reference signal received power (RSRP), reference signal received quality (RSRQ), and reference signal strength indication (RSSI).

The some or all of the uplink beams for access within the coverage area of the second satellite network refer to some or all of the uplink beams received by the second satellite network within its coverage area. In some embodiments, some of the uplink beams may be the uplink beams of other terminal devices that are located close to the terminal device.

Illustratively, when the handover request acknowledge includes the average value of the signal strength (e.g., RSRP) of some or all of the uplink beams received by the second satellite network within its coverage area, the terminal device can obtain this average value through the first handover instruction. The terminal device can estimate the transmit power required to achieve the specified strength at its current location based on this average value, and use the estimated transmit power as the first power for the terminal device to switch to the second satellite network.

Illustratively, when the handover request acknowledge includes the maximum value of the signal strength (e.g., RSRP) of some or all of the uplink beams received by the second satellite network within its coverage area, the terminal device can obtain this maximum value through the first handover instruction. The terminal device can estimate the transmit power required to achieve the specified strength at its current location based on this maximum value, and use the estimated transmit power as the first power for the terminal device to switch to the second satellite network. When the terminal device determines the first power based on the maximum value, it can effectively address the issue of insufficient transmit power and the resulting inability to receive a response.

The beam related to RACH-less handover within the coverage area of the second satellite network refers to the beam associated with reserved RACH-less handover within the coverage area that is received by the second satellite network. In some embodiments, these associated beams may be SSB beams. For example, the path loss reference signal used for PUSCH transmission can be the reference signal of the SSB used for determining reserved PUSCH resources.

Illustratively, when the handover request acknowledge includes the signal strength (e.g., RSRP) of the beam associated with the reserved RACH-less handover within the coverage area received by the second satellite network, the terminal device can obtain this value through the first handover instruction. The terminal device can estimate the transmit power required to achieve the specified strength at its current location based on this maximum value, and use the estimated transmit power as the first power for the terminal device to switch to the second satellite network.

Illustratively, for initial PUSCH transmission based on dynamic grant (DG), the second satellite network can directly indicate the SSB through the physical downlink control channel (PDCCH). Due to the absence of random access, for power control of the initial PUSCH transmission, the path loss reference can be the SSB associated with the initial PUSCH transmission.

The transmit power of at least some of the terminal devices already accessed within the coverage area of the second satellite network for transmitting the random access uplink channels refers to the power received by the second satellite network through the physical random access channel (PRACH) within its coverage area. In some embodiments, these parameters can be determined based on the initial nominal power of the PUSCH. The initial nominal power of PUSCH transmission can be configured in the RRC in the same way as traditionally. In some embodiments, the initial nominal power of PUSCH transmission may not be configured, and these parameters can be determined as an initial target received power of PRACH in the second satellite network. Although PRACH is not initiated by the terminal device performing the RACH-less handover, it can be read from the system information block (SIB) of the second satellite network.

Illustratively, the terminal device may read the PRACH initial target received power of other terminal devices in SIB1 of the second satellite network as a reference for determining the first power.

Illustratively, during the RACH-less handover, due to the absence of random access, the transmit power of the random access uplink channel may be the transmit power of at least some terminal devices to transmit message A (msgA), or it may be the transmit power of at least some terminal devices to transmit message 3 (msg3). That is to say, the first power is determined with the transmit power of other terminal devices for transmitting the message A and/or message 3 as a datum. For example, the datum may be the average or maximum value of the transmit power of some terminal devices for transmitting the message A. For another example, the datum may be the average or maximum value of the transmit power of all terminal devices for transmitting the message A.

The average or maximum value of the admission power of the terminal devices in the second satellite network other than the terminal device refers to the average or maximum value of the admission power of other terminal devices that the second satellite network allows to access. For the terminal device, the relevant parameters of the admission power can serve as a reference for the first power. For example, when the service of the terminal device needs to be timely accessed to the second satellite network, the first power may be equal to or approximate to the maximum value of the admission power. For another example, the first power may be equal to the average value for initial uplink transmission.

Illustratively, the terminal devices other than the terminal device may be some of the terminal devices in the second satellite network, or all of the terminal devices, which is not limited here.

Illustratively, some terminal devices may be other terminal devices located geographically close to the terminal device.

The average path loss or maximum path loss within the coverage area of the second satellite network refers to the average or maximum value of the path loss during communication between the network device corresponding to the second satellite network and other terminal devices, both of which can be used to determine the path loss in the first power.

In some embodiments, the determination of the first power also requires consideration of the maximum output power of the terminal device. The first power may be less than or equal to a specific percentage (e.g., 80%) of the maximum output power. Illustratively, the first power is determined based on the power-related information in the first handover instruction and the maximum output power of the terminal device. For example, if the maximum output power is less than the maximum value of the admission power, the first power can be determined with reference to the average value.

In step S420, the first power of uplink transmission to the second satellite network is determined according to the first handover instruction. The previous text has introduced various possible implementations for determining the first power in conjunction with the information in the first handover instruction. The following provides a brief introduction to the calculation method of PUSCH transmit power.

The first handover instruction may further include the relative position information between the second satellite corresponding to the second satellite network and the terminal device, so as to determine the path loss compensation factor of the terminal device in the second satellite network. The second satellite is the satellite corresponding to the second satellite network, and the first satellite is the satellite corresponding to the first satellite network.

The path loss of the terminal device varies between the first satellite network and the second satellite network, and is related to both distance and frequency. The path loss compensation factor of the terminal device in the second satellite network can be used to compensate for the path loss of the second satellite network. For brevity, the path loss compensation factor of the terminal device in the first satellite network can be referred to as the first path loss compensation factor, and the path loss compensation factor of the terminal device in the second satellite network can be referred to as the second path loss compensation factor.

In some embodiments, the second path loss compensation factor can be included in the first handover instruction sent to the terminal device by the first satellite network. That is to say, after determining the second path loss compensation factor, the second satellite network can directly transmit it to the terminal device through the first handover instruction.

In some embodiments, the relative position information may include the distance between the terminal device and the second satellite. Based on this distance parameter, the path loss can be estimated. The distance can be determined based on the location coordinate information of the terminal device and the location coordinate information of the second satellite. Illustratively, the location coordinate information of the terminal device can be obtained through GNSS location information or other methods. The first satellite network can transmit the location information of the terminal device to the second satellite network via a handover request message. The location information of the second satellite can be determined through satellite ephemeris information (ephemerisInfo).

In some embodiments, the relative position information may include the direction angle between the terminal device and the second satellite. The direction angle may also be referred to as azimuth. The azimuth may be defined as the angle between the line connecting the terminal device and the satellite and the perpendicular line from the satellite to the ground, that is the direction angle between the terminal device and the satellite perpendicular to the ground. The azimuth may also be determined based on the location of the terminal device and the location of the second satellite.

In some embodiments, the relationship between the path loss of the terminal device in the first satellite network and the path loss of the terminal device in the second satellite network can be used to determine the second path loss compensation factor.

Illustratively, the path loss compensation factor of the terminal device in the second satellite network can be determined by the azimuth of the terminal device in the first satellite network and the azimuth of the terminal device in the second satellite network. The second path loss compensation factor is denoted by K, K can be determined according to the following formula:

$$K = \frac{cos\delta 1}{cos\delta 2};$$

where $\delta 1$ represents the azimuth between the terminal device and the first satellite corresponding to the first satellite network, and $\delta 2$ represents the azimuth between the terminal device and the second satellite.

To facilitate understanding, the following schematically illustrates the determination method of the second path loss compensation factor with reference to Fig. 5. Referring to Fig. 5, satellite 510 is the first satellite corresponding to the first satellite network, and satellite 520 is the second satellite corresponding to the second satellite network. The terminal device 530 performs a satellite handover from the coverage area of the first satellite network to the coverage area of the second satellite network.

As shown in Fig. 5, the distance between terminal device 530 and satellite 510 is D1, and the azimuth therebetween is $\delta 1$. The distance between terminal device 530 and satellite 520 is D2, and the azimuth therebetween is $\delta 2$. The first satellite network and the second satellite network can obtain the azimuth $\delta 1$ between the terminal device 530 and the satellite 510, and the azimuth $\delta 2$ between the terminal device 530 and the satellite 520 at this time through the location coordinate information of the terminal device 530.

The preceding text introduces various methods for determining the second path loss compensation factor K. The first power of the terminal device can be determined based on K. Illustratively, the first power (PPUSCH,b,f,c) of uplink transmission by the terminal device in a carrier f, with an uplink bandwidth b, of a serving cell c can be determined according to the following formula:

$$P_{PUSCH,b,f,c}(i,j,q_d,l) =$$

$$min\begin{cases} P_{CMAX,f,c}(i) \\ P_{0_{PUSCH,b,f,c}}(j) + 10log_{10}(2^{\mu} * M_{RB,b,f,c}^{PUSCH}(i)) + K * \alpha_{b,f,c}(j) * PL_{b,f,c}(q_d) + \Delta_{TF,b,c,f}(i) + f_{b,f,c}(i,l) \end{cases};$$

where i represents a transmission occasion, j represents an index of parameter set configuration, qd represents an index of reference signal, l represent an index of power control adjustment state, $\mu$ is related to subcarrier spacing, $P_{CMAX,f,c}(i)$ represents the maximum output power of the terminal device in the second satellite network, $P_{0_{PUSCH,b,f,c}}(j)$ represents the current transmit power of the terminal device in the first satellite network, $M_{RB,b,f,c}^{PUSCH}$ represents the uplink resource bandwidth, $\alpha_{b,f,c}(j)$ represents the path loss compensation factor of the terminal device in the first satellite network, $PL_{b,f,c}(q_d)$ represents the downlink path loss, $\Delta_{TF,b,c,f}(i)$ represents the power adjustment amount, and $f_{b,f,c}(i, l)$ represents the power control adjustment state. Optionally, $M_{RB,b,f,c}^{PUSCH}(i)$ may be the number of resource blocks.

Optionally, $\mu$ may be a subcarrier spacing configuration supported by the protocol, which enables adjustment of bandwidth resources under different subcarrier spacing configurations, thereby achieving corresponding power adjustments.

As mentioned earlier, $\alpha_{b,f,c}(f)$ can be the estimated first path loss compensation factor of the terminal device in the first satellite network at the current time.

Optionally, $PL_{b,f,c}(q_d)$ may be the downlink path loss obtained by the terminal device through measuring the downlink reference signal. This parameter can be determined using the estimation results from the first satellite network, or it can be determined based on the information from the second satellite network included in the first handover instruction sent by the first satellite network.

Optionally, when calculating $PL_{b,f,c}(q_d)$, the terminal device can utilize the reference signal (RS) resource from the SS/PBCH block. The index of the SS/PBCH block is the same as the index of the SS/PBCH block through which the terminal device obtains the master information block (MIB).

Optionally, when calculating $PL_{b,f,c}(q_d)$, the terminal device can utilize the RS resource from the SS/PBCH block. The index of the SS/PBCH block corresponding to the RS resource is the same as the index of the SS/PBCH block used by the terminal device to monitor the PDCCH dynamic scheduling UL grant. The UL grant dynamically scheduled by the PDCCH is used for initial transmission.

$\Delta_{TF,b,c,f}(i)$ can be determined based on the value of the preamble power ramping counter (PREAMBLE_POWER_RAMPING_COUNTER).

Optionally, $f_{b,f,c}(i,l)$ can represent the PUSCH power control adjustment state of the uplink bandwidth part b corresponding to the carrier f of the first satellite network in the PUSCH transmission occasion i. The power control adjustment state value includes the transmit power control (TPC) instruction value in the downlink control information (DCI) format. The power control adjustment state value may also be jointly encoded with other TPC instructions in DCI format 2_2, where the cyclic redundancy check (CRC) is scrambled by TPC-PUSCH-RNTI.

Optionally, $P_{0_{PUSCH,b,f,c}}(j)$ represents the current transmit power value of the terminal device. If the terminal device is in the RRC connect state, the handover request acknowledge message sent from the second satellite network to the first satellite network may include the ConfiguredGrantConfig information sent by the second satellite network to the terminal device. This information may involve resources, beam indices, as well as parameters such as average path loss or maximum path loss within the second satellite network.

The preceding text introduces a method for determining the first power based on the second path loss compensation factor K. As described in the previous text, the first handover instruction can be a RACH-less handover instruction. When the satellite handover is a RACH-less handover, the power adjustment amount of the second satellite network cannot be determined through the preamble power ramping counter mentioned earlier. The power ramping in the preamble power ramping counter is related to the PUSCH and/or PRACH of message A of the first satellite network. The PUSCH and/or PRACH of message A of the first satellite network use the same spatial domain to transmit beams. However, the parameters in the second satellite network cannot be associated with this counter.

To address this issue, a new power adjustment counter, P, can be employed. The power adjustment counter P may be a counter corresponding to RACH-less, and can be used to determine the power adjustment amount in the first power. In some embodiments, the value of the power adjustment counter P may be related to the parameters of the first satellite network accessed by the terminal device. In some embodiments, the value of the power adjustment counter P may be related to the number of random access attempts by the terminal device. Illustratively, the value of the power adjustment counter P represents the number of access attempts made by the terminal device to establish a connection with the first satellite network.

In some embodiments, the power adjustment amount in the first power may also be determined based on a power adjustment factor. The power adjustment factor, for example, is N, where N is a positive integer greater than 1.

Illustratively, the power adjustment factor N may be determined based on the service type of the terminal device. In other words, N is related to the type of service. For example, the higher the quality of service (QoS) requirement, the greater the value of N.

Illustratively, during the handover process, the power adjustment amount used in the first satellite network cannot be carried over. To ensure that the terminal device can successfully perform a handover to the second satellite network, the transmit power at this time needs to be relatively high. Although the high transmit power may cause some interference to other nearby terminal devices, it can ensure a high access success rate. After the terminal device transmits the information indicating a successful handover, which means that the terminal device has established a communication link with the second satellite network, the transmit power of the terminal device decreases accordingly. Even if no TPC adjustment instruction is received in the PDCCH, the terminal device still decreases its transmit power based on the new power adjustment counter.

The preceding text introduces the method for determining the power adjustment factor N. The first power of the terminal device can be determined based on N. Illustratively, the first power (PPUSCH,b,f,c) of uplink transmission by the terminal device in a carrier f, with an uplink bandwidth b, of a serving cell c can be determined according to the following formula:

$$P_{PUSCH,b,f,c}(i, j, q_d, l) =$$

$$min \begin{cases} P_{CMAX,f,c}(i) \\ P_{0_{PUSCH,b,f,c}}(j) + 10log_{10}(2^{\mu} * M_{RB,b,f,c}^{PUSCH}(i)) + \alpha_{b,f,c}(j) * PL_{b,f,c}(q_d) + N * \Delta_{TF,b,c,f}(i) + f_{b,f,c}(i, l) \end{cases};$$

where N represents the power adjustment factor and N > 1. Other parameters have been introduced in the preceding text, and will not be repeated here.

Optionally, both path loss and power adjustment amount can be taken into consideration for determining the first power of the terminal device. Illustratively, the first power (PPUSCH,b,f,c) of uplink transmission by the terminal device in a carrier f, with an uplink bandwidth b, of a serving cell c can be determined according to the following formula:

$$P_{PUSCH,b,f,c}(i, j, q_d, l) =$$

$$min \begin{cases} P_{CMAX,f,c}(i) \\ P_{0_{PUSCH,b,f,c}}(j) + 10log_{10}(2^{\mu} * M_{RB,b,f,c}^{PUSCH}(i)) + K * \alpha_{b,f,c}(j) * PL_{b,f,c}(q_d) + N * \Delta_{TF,b,c,f}(i) + f_{b,f,c}(i, l) \end{cases};$$

where K represents the second path loss compensation factor, and N represents the power adjustment factor.

The preceding text introduces, in conjunction with Figs. 4 and 5, an embodiment of a method for introducing RACH-less handover in the NTN system and the terminal device determining the transmit power after receiving the handover instruction to improve the handover success rate. The terminal device typically performs uplink transmission on the uplink resources pre-configured or dynamically scheduled by the second satellite network.

Compared to cellular networks used by some communication systems (such as NR), the propagation delay between terminal devices and satellites in NTN is relatively large, and the propagation delay of an air interface for the terminal device to correctly receive the handover instruction is also relatively large. When introducing RACH-less handover into the NTN system, due to the large propagation delay, the terminal device may miss the configured uplink resources during the process of accessing the target cell, resulting in a failed handover access. For example, in NTN's RACH-less handover, regarding the delay of the handover instruction from the target satellite to the terminal device, the source satellite may also experience radio link control (RLC) layer retransmission or hybrid automatic repeat reQuest (HARQ) retransmission when forwarding the handover instruction, which increases the propagation delay of the air interface for the terminal device, potentially resulting in unsuccessful access.

In certain scenarios, NTN, like other communication systems (such as 5G (NR)), achieves coverage based on beams. For example, each serving cell carries one or more SSB beams.

SSB beams are typically static or semi-static. The maximum number of SSB beams per cell ranges from 4 to 64, forming a (beam) grid covering the entire cell. Typically, after powering on, the terminal device searches for and measures beams, and maintains a set of candidate beams. The set of candidate beams may include beams from multiple cells. The terminal device can measure the signal of the beam to determine its quality. For example, the terminal device can measure the RSRP of the beam synchronization signal (SS), namely SS-RSRP. For another example, the terminal device can measure the RSRQ based on the synchronization signal, namely SS-RSRQ. For another example, the terminal device can measure the signal-to-noise and interference ratio (SINR) of the beam based on the synchronization signal, namely SS-SINR.

In some embodiments, the network device (e.g., gNB) can determine the appropriate beam based on a layer3 (L3) measurement report or a location report of the terminal device. The L3 measurement report includes beam level results. However, in some cases, the network device does not have such information. For example, the network device does not have the location report.

As can be seen from the preceding text, in RACH-less handover, grants are pre-allocated. If the appropriate beam for the terminal device cannot be determined, allocating grants on all beams in the target cell will result in resource waste, while allocating grants on only some beams may cause the terminal device to miss the configured uplink resources.

For example, in NTN, without the location report or L3 measurement report, the target NTN2 cannot determine the beam associated with the terminal device, or the appropriate beam may change before or during the RACH-less handover process, making it impossible to pre-configure suitable uplink resources.

Similarly, in the case of combining conditional handover (CHO) with RACH-less handover, the moment of handover trigger is uncertain, and it may also be impossible to preconfigure suitable uplink resources.

In summary, when introducing RACH-less handover in the NTN scenario, how to reserve and pre-configure uplink resources in the RACH-less handover instruction to improve the handover success rate of the terminal device is an issue that needs to be addressed.

It should be noted that the issue of handover failure due to large propagation delay and improper reservation resource allocation when introducing RACH-less handover in the NTN system mentioned above is merely an example. The embodiments of the present application can be applied to any type of handover scenario where the propagation delay is large and the terminal device cannot communicate with the target cell through random access.

Based on this, the embodiments of the present application propose another satellite handover method for NTN. Through this method, the terminal device can transmit the selected beam or measurement information of the beam to the target satellite network before performing cell handover, so that the target satellite network can allocate uplink resources on the appropriate beam based on this information, thereby improving the handover success rate.

To facilitate understanding, another method proposed in the embodiments of the present application is described in detail below with reference to Fig. 6. Fig. 6 shows a scheme from the perspective of the interaction between the terminal device, the first satellite network, and the second satellite network. The method shown in Fig. 6 is also utilized for satellite handover from the coverage area of the first satellite network to the coverage area of the second satellite network. For brevity, the explanations of terms provided for Fig. 4 will not be repeated for Fig. 6.

Referring to Fig. 6, in step S610, the terminal device transmits first information to the first satellite network.

The first information is used by the second satellite network to determine a first beam corresponding to the terminal device, so that the second satellite network can pre-configure a first resource for satellite handover for the terminal device. The first beam is also used by the second satellite network to schedule a second resource. That is to say, the first beam is related to the first resource and/or the second resource of the second satellite network used for satellite handover.

In some embodiments, the first resource may be a configured or pre-configured resource. For example, the first resource is a reserved resource for the terminal device to perform a satellite handover. For another example, the first resource may include uplink grants for satellite handover.

In some embodiments, the second resource may be a scheduled uplink resource. The uplink resource can be dynamically scheduled.

Illustratively, the first resource is a reserved resource for satellite handover, and the second resource is a scheduled uplink resource for the terminal device to perform a satellite handover. For example, the first resource may be a reserved resource for the terminal device to transmit the initial uplink transmission, and the second resource may be a resource dynamically scheduled through PDCCH.

The first beam is one of all beams used by the second satellite network to cover the service area. In some embodiments, the first beam may be a single beam. In some embodiments, the first beam may be multiple beams. Generally, the number of beams in the first beam is less than the number of all beams in the second satellite network, so the second satellite network allocates uplink resources only on some beams, which can effectively save resources.

The terminal device can determine multiple beams of the second satellite network through various methods. In some embodiments, before the handover process and after the first satellite network informs the terminal device of the target satellite network (i.e., the second satellite network) for handover, the terminal device can determine multiple beams of the second satellite network through measurement. In some embodiments, before the handover process, the first satellite network may provide the terminal device with information indicating multiple beams in the second satellite network. This information can identify multiple beams, or identify beam information by identifying the reference signals transmitted through the beams. For example, the terminal device can identify beam information through SSB. For another example, the terminal device can identify and measure one or more characteristics of the reference signal after receiving the information to determine the beam. The one or more characteristics include power, RSRP, RSRQ, etc.

The first beam may be one or more beams that allow the terminal device to access the second satellite network, or it may also be an appropriate beam for the terminal device to conduct subsequent communication with the second satellite network. In other words, the terminal device can establish communication with the second satellite network through the first beam. When the second satellite network configures or pre-configures the first resource for satellite handover on the first beam, the terminal device can better utilize these resources for network access, thereby improving the success rate of satellite handover while avoiding resource waste.

The first beam is associated with the first resource pre-configured for satellite handover by the second satellite network. Illustratively, the second satellite network allocates grants for satellite handover on the first beam. The second satellite network can perform resource reservation associated with the first beam and include information related to resource reservation in the handover request acknowledge sent to the first satellite network.

The first resource may be a time-frequency resource reserved by the second satellite network for satellite handover of the terminal device. For example, the first resource may be used for the initial uplink transmission of the terminal device during a RACH-less handover. Since these resources are only utilized during the handover of the terminal device, the first resource is generally pre-configured by the second satellite network. It should be understood that in certain scenarios, the second satellite network can also dynamically configure the first resource.

In some embodiments, the first resource may include one or more pre-allocated grants. For example, the terminal device can perform access through these pre-allocated grants.

The second resource may be the resource scheduled by the second satellite network according to communication requirements, facilitating uplink transmission by the terminal device. In some embodiments, the second resource may be the uplink resources dynamically scheduled by the second satellite network. In some embodiments, the second resource may be the uplink resources scheduled in real-time by the second satellite network.

Illustratively, the second satellite network may transmit PDCCH on the first beam. For example, in RACH-less handover, the second satellite network does not transmit a media access control control element (MAC CE) of a terminal device contention resolution identifier. Instead, it transmits a PDCCH or a physical downlink shared channel (PDSCH) that can be addressed to the cell-radio network temporary identifier (C-RNTI).

Illustratively, before completing the RACH-less handover, the MAC entity may not select the uplink grant corresponding to the logical channel associated with the data radio bearer (DRB). The uplink grant is used for the uplink grant of the HARQ process for the initial UL transmission. If a PDCCH addressed to C-RNTI and scheduling DL/UL is received after the initial UL transmission, it is considered that the RACH-less handover is completed.

In some embodiments, the first resource may include one or more pre-allocated UL grants. These grants can be used for the terminal device to access the network. For example, based on the measurement report, the second satellite network can provide one or more UL grants to the terminal device. One or more UL grants can each be associated with the first beam in the second satellite network.

Illustratively, the terminal device can use available UL grants (RRC, MAC, PHY) to transmit the initial uplink transmission. The initial uplink transmission includes messages such as RRCReconfigurationComplete.

In some embodiments, the first resource may also be associated with the SSB index of the first beam, so that the terminal device can determine the beam where the first resource is located through the SSB index. For example, the first beam is also used to carry one or more synchronization signal blocks for satellite handover of the terminal device. The index of the one or more synchronization signal blocks is associated with the first resource.

Illustratively, the first information may also include the index of one or more SSBs measured by the terminal device. The second satellite network can determine the first beam through the SSB index. In the case where a single SSB is mapped to one beam, since the beam coverage area is significantly larger than that of a TN, and different frequency reuse patterns are considered between beams, the SSB detectable at a specific time and UE location represents the appropriate beam for subsequent communication. However, in NTN, there may be cases where one or more SSBs are associated with a single beam. If multiple SSBs are mapped to a single beam, the channel quality is nearly similar or entirely identical due to the shared satellite configuration and propagation. In this scenario, the terminal device may be unable to perform SSB selection during RACH-less handover. To address this issue, when the second satellite network allocates the first beam for use in RACH-less handover of the terminal device, the first beam can be associated with the SSB index. The terminal device can be aware of the reservation information related to the pre-allocated resources associated with this SSB index.

Illustratively, the second satellite network can specify one or more grants associated with the SSB index. The grant associated with the SSB index is used to indicate the SSB available for RACH-less handover and the corresponding resources. If the terminal device accesses these SSBs, it can directly perform synchronization and network access.

The first information may include various types of content to facilitate the second satellite network in determining the first beam. In some embodiments, the first information may directly indicate the first beam selected by the terminal device. That is to say, the terminal device can determine an appropriate first beam on its own and then inform the second satellite network through the first satellite network. For example, the terminal device may measure multiple beams of the second satellite network, determine the first beam based on the measurement results, and directly inform the second satellite network of this information through the first information. In some embodiments, the first information may include multiple first measurement results obtained by the terminal device through measuring multiple beams of the second satellite network. Multiple first measurement results are used by the second satellite network to determine the first beam. That is to say, the first information can also be a measurement report. For example, the terminal device may measure the respective strengths of the reference signals, generate individual measurement reports, and provide these reports to the second satellite network.

In some embodiments, when the terminal device performs beam selection, the beam selection may be periodic, aperiodic, or triggered. During satellite handover, through the association between the pre-allocated grants and beams (or SSBs), the second satellite network can be aware of the beam selected by the terminal device and utilize the corresponding beam to schedule subsequent transmissions.

The first measurement result can be the outcome of the terminal device measuring the reference signal of the beam. In some embodiments, the reference signal may be a SSB reference signal (SSB-RS), a channel state information (CSI) reference signal (CSI-RS), or a combination of CSI-RS and SSB-RS.

The first measurement result can be used to indicate the signal quality of the beam reference signal. Signal quality can also be referred to as signal strength. To indicate signal quality, the first measurement result can be any one or combination of the aforementioned RSRP, RSRQ, RSSI, and SINR.

In some embodiments, the terminal device or the second satellite network may determine the first beam based on multiple first measurement results and/or a first threshold. The first threshold may be set by the terminal device or by the second satellite network. In some embodiments, the terminal device and the second satellite network may share the parameter through the first satellite network, so that the first beams determined by both are the same or similar.

Illustratively, the first measurement result corresponding to the first beam may be the maximum value among multiple first measurement results. In this scenario, the first beam may include one beam. For example, the second satellite network may generate a UL grant associated with the reference signal of the highest strength.

Illustratively, the first measurement result corresponding to the first beam may be a specified number of larger measurement results among multiple first measurement results. That is to say, the number of the first beam can be specified. For example, the first measurement result corresponding to the first beam may be the largest M values among multiple first measurement results, where M is greater than 1. In this scenario, the first beam may include multiple beams. For example, the second satellite network may generate UL grants for a specified number of beams with the best quality level (e.g., based on strength) among the measured reference signals.

Illustratively, the first measurement result corresponding to the first beam may be multiple measurement results greater than the first threshold. That is to say, the signal quality corresponding to the first beam can be specified. In this scenario, the first beam may include at least one beam. For another example, the second satellite network may generate a UL grant for the reference signal that is at least greater than a RSRP threshold level. To ensure that the first beam determined by the terminal device corresponds to the second satellite network, the second satellite network can transmit second information indicating the first beam to the terminal device through the first satellite network. If the second information indicates a single beam or multiple beams, the terminal device monitors the PDCCH of the second satellite network based on the indicated beam(s), thereby improving the access success rate. Otherwise, the terminal device monitors the PDCCH based on the beam it has selected. For example, the terminal device directly suggests a first beam in the first information, and the second satellite network transmits PDCCH based on the first beam.

In some embodiments, the terminal device may receive the second information in the received first handover instruction.

In some embodiments, the terminal device may receive the second information after transmitting the first information. The second information is used to indicate the first beam. After receiving the first handover instruction, the terminal device can detect the downlink channel sent by the second satellite network based on the first beam indicated by the second information.

Illustratively, the first beam may be indicated by an identifier of the reference signal associated with the first beam. For example, the second satellite network may specify the reference signal associated with the UL grant by associating the identifier (e.g., index) of the reference signal with the UL grant. Optionally, the second satellite network may include an identifier in a message (e.g., RRC message) providing UL grant to the terminal device.

Before the terminal device performs satellite handover, the first information can be sent to the first satellite network at different times. In some embodiments, the first information can be sent to the first satellite network after the handover decision is made by the first satellite network. Illustratively, after the first satellite network determines the second satellite network through a handover decision, the terminal device may measure multiple beams of the second satellite network to generate the first information. Illustratively, after determining the second satellite network, the first satellite network may transmit information about multiple beams in the second satellite network to the terminal device. After receiving the information, the terminal device performs beam measurement or beam selection to generate the first information to be sent. In some embodiments, the first information may be included in the first measurement report sent by the terminal device. For example, in the case that the second satellite network is not determined through a decision from the first satellite network, or the first satellite network dose not need to inform the terminal device of the beam information of the second satellite network, the terminal device may include the first information in the first measurement report used for handover.

In step S620, the first satellite network transmits the first information to the second satellite network. Since the terminal device has not yet accessed the second satellite network, the first information needs to be forwarded to the second satellite network by the first satellite network. Furthermore, the second information sent by the second satellite network for indicating the first beam also needs to be forwarded to the terminal device by the first satellite network.

In some embodiments, the first information may be included in the handover request sent from the first satellite network to the second satellite network, to reduce interaction between the two satellite networks and conserve air interface resources.

In some embodiments, the second information may be included in the handover request acknowledge sent from the second satellite network to the first satellite network, to reduce interaction between the two satellite networks and conserve air interface resources.

Referring to Fig. 6 again, in step S630, the first handover instruction is received.

The first handover instruction received by the terminal device originates from the first satellite network. In other words, the first satellite network currently providing services to the terminal device instructs the terminal device to perform handover. In some embodiments, the first network device corresponding to the first satellite network transmits the first handover instruction to the terminal device.

The first handover instruction is used to trigger the terminal device to perform handover. In some embodiments, the first satellite network may trigger a handover by transmitting RRC signaling to the terminal device. For example, the first satellite network may trigger a RACH-less handover by transmitting an RRCReconfiguration message to the terminal device. In some embodiments, the first satellite network may complete the handover trigger through individually configured information. For example, a message related to the RACH-less handover instruction may be sent through additional dedicated signaling.

The first handover instruction is used to instruct the terminal device to perform a satellite handover from the coverage area of the first satellite network to the coverage area of the second satellite network. In some embodiments, due to the movement of satellites, the area where the terminal device is located transitions from the coverage area of the first satellite network to the coverage area of the second satellite network, necessitating a handover. In some embodiments, due to the movement of the terminal device or edge communication, the area where the terminal device is located transitions from the coverage area of the first satellite network to the coverage area of the second satellite network, necessitating a handover.

The first handover instruction may be a satellite handover instruction in various forms. In some embodiments, the first handover instruction may be an instruction indicating that the terminal device cannot perform a satellite handover through RACH. For example, the first handover instruction is a RACH-less handover instruction. For another example, the first handover instruction does not provide resources for the terminal device to perform random access. The following text uses RACH-less handover as an example to provide a detailed explanation of the embodiments of the present application.

In some embodiments, the first satellite network may determine whether to transmit a RACH-less handover instruction to the terminal device based on actual conditions. For example, when the service network of the terminal device needs to be switched from the first satellite network to the second satellite network due to satellite movement or other reasons, RACH-less handover can be the first choice to reduce the switching delay.

When satellite handover is RACH-less handover, the first satellite network needs to determine the second satellite network that meets the RACH-less handover conditions before transmitting the first handover instruction. As can be seen from the preceding text, there are multiple satellite networks that can provide services for the terminal device, and these satellite networks can be referred to as candidate satellite networks. If there is no second satellite network satisfying the RACH-less handover conditions among these candidate satellite networks, the terminal device may follow the traditional handover process for satellite handover. If the first satellite network fails to find a second satellite network that meets the conditions, the first handover command is an instruction for a conventional handover procedure.

In some embodiments, the first satellite network may determine the second satellite network based on the measurement report from the terminal device. For example, the first satellite network may determine the second satellite network that meets certain conditions based on the measurement results in the measurement report. In some embodiments, the first satellite network may determine the second satellite network on its own. For example, after determining multiple satellite networks that can provide services for the terminal device, the first satellite network may determine the second satellite network based on the location information or movement information of the terminal device.

In some embodiments, when satellite handover is RACH-less handover, the terminal device may transmit a first measurement report to the first satellite network. The first measurement report may include multiple second measurement results obtained by the terminal device from measuring reference signals of multiple candidate satellite networks, to determine a second satellite network among the multiple candidate satellite networks that meets the RACH handover conditions.

As mentioned earlier, the reference signals of multiple candidate satellite networks may also be SSB-RS and/or CSI-RS. The signal quality of the reference signal may be at least one of RSRP, RSRQ, SINR, and RSSI.

Illustratively, the terminal device may measure the signal power and/or signal quality of the reference signal in each candidate satellite network coverage area. In a case that there are multiple candidate satellite networks, multiple second measurement results can be obtained. These second measurement results can be utilized to generate the first measurement report. In other words, if there are multiple target NTNs, such as NTN2, NTN3, etc., the terminal device reports reference signal measurement results based on these multiple target NTNs.

Illustratively, multiple second measurement results in the first measurement report can be used to determine whether there is a second satellite network that meets the RACH handover conditions. For example, the second satellite network is determined based on whether any of the multiple CSI-RS measurement results meets the RACH handover conditions. For another example, the second satellite network is determined based on whether any SSB-RS measurement result of one or more candidate satellite networks meets the RACH handover conditions.

In some embodiments, satellite handover may be a satellite exchange that supports no change in PCI (without requiring L3 mobility). In a case that PCI remains unchanged, the terminal device can switch to a target satellite with the same cell configuration except for satellite-specific information. Illustratively, apart from TA acquisition and DL/UL synchronization in scenarios where the PCI remains unchanged, the terminal device can maintain its terminal-specific configuration unchanged. In other words, the terminal device does not need to perform reconfiguration. Therefore, the scenario where PCI remains unchanged is a specific case of inter-satellite handover involving the same gateway/gNB.

Optionally, if the first satellite network receives RACH-less handover information from a candidate satellite network with the same PCI, this candidate satellite network may be used as the preferred target satellite network.

In specific handover methods such as RACH-less handover, the quality of the reference signal from the second satellite network is crucial. For example, in RACH-less handover, to ensure reliable initial UL transmission, the signal quality of the downlink of the second satellite network needs to be greater than or equal to a certain threshold. For another example, only when the downlink RSRP measured by the terminal device is greater than or equal to the RSRP threshold, RACH-less handover can be triggered.

Illustratively, the second measurement result corresponding to the second satellite network may be the maximum value among multiple second measurement results. For example, the first satellite network may select the satellite network with the largest RSRP among multiple candidate satellite networks as the second satellite network.

Illustratively, the second measurement result corresponding to the second satellite network is one of the second measurement results that is greater than or equal to a second threshold among multiple second measurement results. The second threshold can be set by the first satellite network. In some embodiments, the second threshold may vary for different signal quality parameters. In some embodiments, the second threshold may be determined based on parameters such as the actual communication environment and service type.

For example, in a case that the first measurement report includes the RSRP of SSB-RS of multiple candidate satellite networks, if the RSRP of a certain candidate satellite network is greater than or equal to the second threshold corresponding to the RSRP, this candidate satellite network is selected as the second satellite network. The first satellite network prioritizes RACH-less handover as the optimal handover method based on the terminal device's measurement report and proceed to handover to the candidate satellite network.

For another example, the terminal device reports the first measurement report to the first satellite network. After receiving the first measurement report, the first satellite network decides whether to trigger the RACH-less handover of the terminal device. The terminal device is triggered to perform a RACH-less handover only if the downlink RSRP measured by the terminal device is greater than or equal to the RSRP threshold.

In some embodiments, the first satellite network transmits a handover request to the second satellite network before transmitting a handover instruction, and transmits the first handover instruction after receiving the request acknowledge from the second satellite network. Illustratively, after determining that there is a satellite network that meets the conditions and a RACH-less handover is triggered, the first satellite network transmits a RACH-less handover request to the second satellite network. The second satellite network may transmit a handover request acknowledge (ACK) message to the first satellite network. The first satellite network may transmit a first handover instruction to the terminal device based on this acknowledge.

Illustratively, the handover request acknowledge may also be referred to as a handover request response, reply information, etc. The handover request acknowledge may be denoted as "HANDOVER REQUEST ACKNOWLEDGE".

The handover request acknowledge sent by the second satellite network may include various information, facilitating the first satellite network to inform the terminal device through the first handover instruction. For example, the handover request acknowledge includes the UL grant determined by the second satellite network. For another example, the handover request acknowledge may also include the SSB index and pre-allocated grants related to the transmission by the terminal device in the second satellite network.

In some embodiments, the handover request acknowledge may include information related to resource reservation, or factor information related to power when the terminal device switches the second satellite network. The information related to power has been explained in conjunction with Fig. 4.

Illustratively, the handover request acknowledge includes the second information mentioned earlier, to reduce the interaction between the terminal device, the first satellite network, and the second satellite network. In other words, the second satellite network can indicate the first beam or SSB index associated with the first resource through the handover request acknowledge.

The first satellite network can generate the first handover instruction based on the handover request acknowledge from the second satellite network. The first handover instruction may include various types of information.

In some embodiments, the first handover instruction includes one or more of the following: pre-allocated grants from the second satellite network; pre-configured first resources from the second satellite network; beam index associated with the synchronization signal block in the second satellite network; maximum signal quality reported within the coverage area and received by the second satellite network, along with the beam index related thereto; beam index associated with the specified signal quality reported within the coverage area and received by the second satellite network; average value of admission power of terminal devices other than the terminal device in the second satellite network; and maximum value of admission power of terminal devices other than the terminal device in the second satellite network.

Illustratively, the pre-allocated grants and pre-configured first resources from the second satellite network are used for the terminal device to perform handover.

Illustratively, the beam index associated with the synchronization signal block in the second satellite network refers to the beam index corresponding to the SSB associated with the pre-allocated grants or the first resources in the second satellite network.

Illustratively, the maximum signal quality reported within the coverage area and its associated beam index may be the beam index corresponding to the signal with the highest received signal quality in the second satellite network, so as to facilitate the terminal device in determining an access beam.

Optionally, the terminal device may select the maximum signal quality and the associated beam from the signal quality reported by other terminal devices within the coverage area of the second satellite network, and use them as the access beam for its own access in the second satellite network.

Illustratively, the beam index associated with the specified signal quality reported within the coverage area may be the beam index of the signal corresponding to the specified signal quality parameter, which can be used by the terminal device to determine the optimal access beam.

Optionally, the specified signal quality may be determined based on the average signal quality and a specific reference quantity. For example, the specified signal quality may be the signal quality obtained by adding the average signal quality to the specific reference quantity or subtracting the average signal quality from the specific reference quantity.

Optionally, the specified signal quality may be determined based on the maximum signal quality and a specific reference quantity. For example, the specified signal quality may be the signal quality obtained by subtracting the specific reference quantity from the maximum signal quality.

Optionally, the beam associated with the signal quality obtained by adding the specific reference quantity to or subtracting the specific reference quantity from the reported average signal quality may be used as the access beam in the second satellite network.

Optionally, signal quality may also be referred to as signal strength, which can be represented by at least one parameter indicating signal quality, such as RSRP, RSRQ, RSSI, or others as described earlier.

Illustratively, the average and maximum values of the admission power of terminal devices other than the terminal device in the second satellite network may be used for the terminal device to determine the transmit power.

For example, when the first handover instruction is a RACH-less handover instruction, the instruction may include one or more of the following: pre-allocated grants, beam index associated with SSB-based access, and resource reservations; azimuth of the second satellite network relative to the terminal device provided based on the terminal device's location information; maximum signal strength received by the second satellite network within the coverage area, such as RSRP, RSSI, etc.; average signal strength received by the second satellite network within the coverage area, such as RSRP, RSSI, etc.; average admission received power of other terminal devices admitted to the second satellite network; maximum admission received power of other terminal devices admitted to the second satellite network; time-related parameters of the second satellite network.

As can be seen from Fig. 6, in certain handovers (e.g., RACH-less handover), the terminal device may transmit information identifying the first beam to the second satellite network after determining the second satellite network for the handover, so as to facilitate more effective resource reservation by the second satellite network and thereby improve the success rate of the handover. When resource reservation is indicated through UL grant, the UL grant may be allocated via RRC signaling and/or the PDCCH of the second satellite network to facilitate reception by the terminal device.

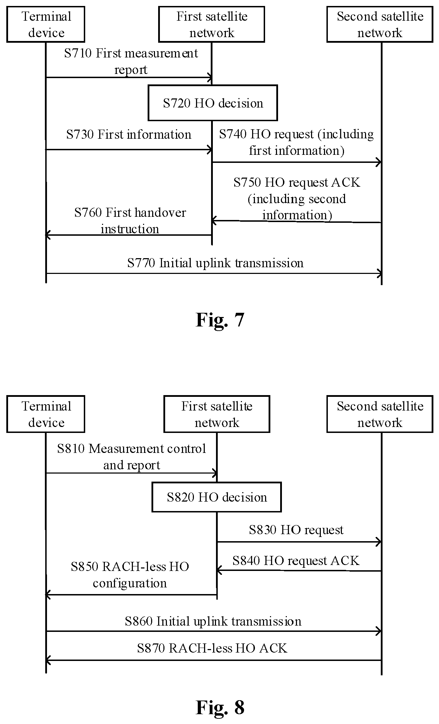

For ease of understanding, an illustrative introduction is provided below based on two possible implementations shown in Fig. 7 and Fig. 8. Fig. 7 is a schematic flowchart illustrating the terminal device transmitting the first information to the second satellite network before receiving the first handover instruction. Fig. 8 is a schematic flowchart of a terminal device performing RACH-less handover.

Referring to Fig. 7, in step S710, the terminal device transmits a first measurement report to the first satellite network.

In step S720, the first satellite network makes a handover decision to determine the second satellite network.

In step S730, the terminal device transmits the first information to the first satellite network. The terminal device can identify and measure based on the beam identification information of the second satellite network sent by the first satellite network, and generate and transmit the first information.

In step S740, the first satellite network transmits a handover request to the second satellite network. The handover request contains the first information used by the second satellite network to determine the first beam.

In step S750, the second satellite network transmits a handover request acknowledge to the first satellite network. The handover request acknowledge contains the second information indicating the first beam to the terminal device.

In step S760, the first satellite network transmits a first handover instruction to the terminal device.

In step S770, the terminal device transmits an initial uplink transmission to the second satellite network.

In Fig. 7, transmission of the first information by the terminal device is after the handover decision. Illustratively, before the terminal device transmits the first information used by the second satellite network to determine the first beam, the first satellite network may transmit the decision result of step S504 to the terminal device, so as to facilitate the terminal device in determining the second satellite network.

Referring to Fig. 8, in step S810, the terminal device transmits a measurement control and report to the first satellite network.

In step S820, the first satellite network makes a handover decision (HO decision).

In step S830, the first satellite network transmits a handover request (HO request) to the second satellite network.

In step S840, the second satellite network transmits a handover request acknowledge (HO request ACK) to the first satellite network.

In step S850, the first satellite network transmits configuration information for RACH-less handover (RACH-less HO configuration) to the terminal device. The terminal device sequentially start timers T304 and T430.

In step S860, the terminal device transmits an initial uplink transmission. The initial uplink transmission is sent through available uplink grants (RRC, MAC, PHY). The initial uplink transmission includes the transmission of the RRCReconfigurationComplete message.

In step S870, the terminal device receives the acknowledge (RACH-less HO ACK) from the second satellite network, thereby completing the RACH-less handover. The second satellite network releases pre-allocated UL grants. The terminal device stops timer T304.

The handover request acknowledge in Fig. 8 contains the second information mentioned earlier, so as to facilitate the terminal device to determine the first beam or SSB associated with the reserved resources of the second satellite network.

In certain mobility scenarios, the terminal device may receive a handover instruction that includes a list of candidate satellite networks (which can be referred to as candidate networks) and handover conditions, and autonomously perform a handover (or handover attempt) to the target satellite network. The target satellite network is one of the candidate networks that meet the handover conditions. Such handover can be referred to as conditional handover (CHO), and the handover instruction associated with conditional handover can be referred to as conditional handover instruction. For conditional handover, the terminal device can autonomously select the target network among candidate networks based on measurements of these candidate networks.

In NTN, if CHO is configured, the condition for the terminal device to perform a satellite handover can be referred to as the first condition. In other words, the satellite handover is executed when the first condition is met.

If RACH-less handover and CHO are configured, the first handover instruction needs to indicate multiple candidate satellite networks as well as multiple uplink grants. For example, the first handover instruction includes parameters of multiple candidate satellite networks, and the first resource in the first handover instructions include multiple uplink grants. The terminal device can determine the second satellite network among multiple candidate satellite networks when the first condition is met, and determine the uplink grant for satellite handover among multiple uplink grants.

Illustratively, in a satellite handover configured with RACH-less handover and CHO, the first satellite network and the second satellite network need to indicate timing adjustments and optionally multiple pre-allocated grants.

Illustratively, the first satellite network may also receive third information sent by the terminal device. The third information is used to indicate the first condition. The third information may include one or more of the following: handover conditions associated with at least one candidate satellite network based on SSB-RS; handover conditions associated with at least one candidate satellite network based on CSI-RS; measurement results/information of at least one SSB-RS or CSI-RS; and at least one SSB-RS or CSI-RS associated with contention-free random access resources.

For example, the first satellite network may receive RRC reconfiguration information from the terminal device. The RRC reconfiguration information may include signal measurement results of at least one target satellite network, as well as at least one SSB-RS and at least one CSI-RS associated with CHO execution, CHO execution conditions based on SSB, and CHO execution conditions based on CSI-RS.

The preceding text introduces the incorporation of RACH-less handover and CHO handover conditions in NTN, so that the terminal device can autonomously perform a satellite handover when the conditions are met.

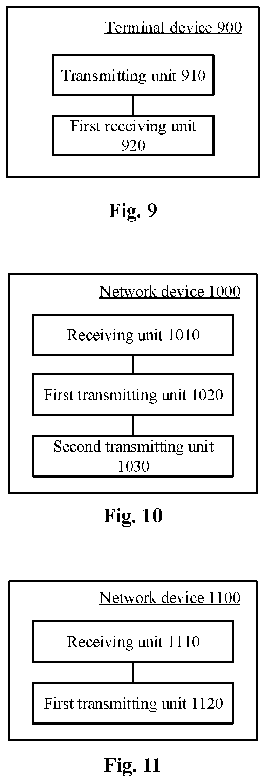

The method embodiments of the present application are described in detail above in conjunction with Figs. 1 to 8. The device embodiments of the present application are described in detail with reference to Figs. 9 to 15. It should be understood that the description of the embodiments of device corresponds to the description of the embodiments of method. Therefore, the parts not described in detail can refer to the previous embodiments of method.

Fig. 9 is a schematic block diagram of a terminal device provided in the embodiments of the present application. The terminal device 900 may be any of the terminal devices described above. The terminal device 900 shown in Fig. 9 includes a transmitting unit 910 and a first receiving unit 920.

The transmitting unit 910 is configured to transmit first information used by the second satellite network to determine a first beam corresponding to the terminal device. The first beam includes one or more beams. The first beam is associated with the first resource and/or second resource pre-configured for satellite handover by the second satellite network.

The first receiving unit 920 is configured to receive a first handover instruction used to instruct the terminal device to perform a satellite handover from the coverage area of the first satellite network to the coverage area of the second satellite network.

Optionally, the first handover instruction includes one or more of the following: pre-allocated grants from the second satellite network; pre-configured first resources from the second satellite network; beam index associated with the synchronization signal block in the second satellite network; maximum value of signal quality in the coverage area received by the second satellite network; average value of signal quality in the coverage area received by the second satellite network; average value of admission power of terminal devices other than the terminal device in the second satellite network; and maximum value of admission power of terminal devices other than the terminal device in the second satellite network.

Optionally, the first information includes multiple first measurement results obtained by the terminal device through measuring reference signals of multiple beams of the second satellite network, and the multiple first measurement results are used to determine the first beam.

Optionally, the first measurement result corresponding to the first beam is the maximum value among the multiple first measurement results, or the largest M values among the multiple first measurement results.

Optionally, the first measurement result corresponding to the first beam is greater than the first threshold.

Optionally, the first resource is a reserved resource for satellite handover, and the second resource is a scheduled uplink resource for the terminal device to perform a satellite handover.

Optionally, the first receiving unit 920 is further configured to receive second information after transmitting the first information, wherein the second information is used to indicate the first beam. The terminal device 900 further includes a second receiving unit configured to detect the downlink channel sent by the second satellite network based on the first beam after receiving the first handover instruction.

Optionally, the first beam is indicated by an identifier of the reference signal associated with the first beam.

Optionally, the satellite handover is RACH-less handover, and the second satellite network is a satellite network that meets the conditions for RACH-less handover. The transmitting unit 910 is further configured to transmit a first measurement report before transmitting the first information. The first measurement report is used for the first satellite network to determine the second satellite network among multiple candidate satellite networks. The first measurement report includes multiple second measurement results obtained by the terminal device from measuring reference signals of multiple candidate satellite networks.

Optionally, the second measurement result corresponding to the second satellite network is the maximum value among multiple second measurement results, or one of the second measurement results that is greater than or equal to a second threshold.

Optionally, the reference signal includes SSB-RS and/or CSI-RS.

Optionally, the first beam is also used to carry one or more synchronization signal blocks for satellite handover of the terminal device, and the index of one or more synchronization signal blocks is associated with the first resource.

Optionally, the first handover instruction is a RACH-less handover instruction.

Optionally, the satellite handover is executed when the first condition is met. The first handover instruction includes parameters of multiple candidate satellite networks, and the first resource includes multiple uplink grants. The terminal device 900 further includes a first determining unit configured to determine a second satellite network among multiple candidate satellite networks; and a second determining unit configured to determine the uplink grant among multiple uplink grants for the terminal device to perform handover.

Optionally, the transmitting unit 910 is further configured to transmit third information to the first satellite network, where the third information is used to indicate the first condition. The third information includes one or more of the following: handover conditions associated with at least one candidate satellite network based on SSB-RS; handover conditions associated with at least one candidate satellite network based on CSI-RS; measurement results/information of at least one SSB-RS or CSI-RS; and at least one SSB-RS or CSI-RS associated with contention-free random access resources.

Fig. 10 is a schematic block diagram of a network device provided in the embodiments of the present application. The network device 1000 may be any of the network devices corresponding to the first satellite network described above. The network device 1000 shown in Fig. 10 includes a receiving unit 1010, a first transmitting unit 1020, and a second transmitting unit 1030.

The receiving unit 1010 is configured to receive the first information transmitted by the terminal device.

The first transmitting unit 1020 is configured to transmit first information to the second satellite network. The first information is used by the second satellite network to determine a first beam corresponding to the terminal device. The first beam includes one or more beams. The first beam is associated with the first resource and/or second resource pre-configured for satellite handover by the second satellite network.

The second transmitting unit 1030 is configured to transmit a first handover instruction to the terminal device. The first handover instruction is used to instruct the terminal device to perform a satellite handover from the coverage area of the first satellite network to the coverage area of the second satellite network.

Optionally, the first handover instruction includes one or more of the following: pre-allocated grants from the second satellite network; pre-configured first resources from the second satellite network; beam index associated with the synchronization signal block in the second satellite network; maximum value of signal quality in the coverage area received by the second satellite network; average value of signal quality in the coverage area received by the second satellite network; average value of admission power of terminal devices other than the terminal device in the second satellite network; and maximum value of admission power of terminal devices other than the terminal device in the second satellite network.

Optionally, the first resource is a reserved resource for satellite handover, and the second resource is a scheduled uplink resource for the terminal device to perform a satellite handover.

Optionally, the receiving unit 1010 is further configured to receive second information sent by the second satellite network after transmitting the first information to the second satellite network. The first transmitting unit 1020 is further configured to transmit the second information to the terminal device, where the second information is used to indicate the first beam.

Optionally, the satellite handover is RACH-less handover, and the second satellite network is a satellite network that meets the conditions for RACH-less handover. The receiving unit 1010 is further configured to receive a first measurement report sent by the terminal device before receiving the first information sent by the terminal device. The first measurement report is used for the first satellite network to determine the second satellite network among multiple candidate satellite networks. The first measurement report includes multiple second measurement results obtained by the terminal device from measuring reference signals of multiple candidate satellite networks.

Optionally, the second measurement result corresponding to the second satellite network is the maximum value among multiple second measurement results, or one of the second measurement results that is greater than or equal to a second threshold.

Optionally, the reference signal includes SSB-RS and/or CSI-RS.

Optionally, the first handover instruction is a RACH-less handover instruction.

Optionally, the satellite handover is executed when the first condition is met, the first handover instruction includes parameters of multiple candidate satellite networks, and the receiving unit 1010 is further configured to receive third information sent by the terminal device, where the third information is used to indicate the first condition. The third information includes one or more of the following: handover conditions associated with at least one candidate satellite network based on SSB-RS; handover conditions associated with at least one candidate satellite network based on CSI-RS; measurement results/information of at least one SSB-RS or CSI-RS; and at least one SSB-RS or CSI-RS associated with contention-free random access resources.

Fig. 11 is a schematic block diagram of another network device provided in the embodiments of the present application. The network device 1100 may be any of the network devices corresponding to the second satellite network described above. The network device 1100 shown in Fig. 11 includes a receiving unit 1110, and a first transmitting unit 1120.

The receiving unit 1110 is configured to receive the first information sent by the first satellite network. The first information is used by the second satellite network to determine a first beam corresponding to the terminal device. The first beam includes one or more beams. The first beam is associated with the first resource and/or second resource pre-configured for satellite handover by the second satellite network.

The first transmitting unit 1120 is configured to transmit a handover request acknowledge to the first satellite network according to a handover request sent by the first satellite network. The handover request acknowledge is used for the first satellite network to transmit the first handover instruction to the terminal device. The first handover instruction is used to instruct the terminal device to perform a satellite handover from the coverage area of the first satellite network to the coverage area of the second satellite network.

Optionally, the first handover instruction includes one or more of the following: pre-allocated grants from the second satellite network; pre-configured first resources from the second satellite network; beam index associated with the synchronization signal block in the second satellite network; maximum value of signal quality in the coverage area received by the second satellite network; average value of signal quality in the coverage area received by the second satellite network; average value of admission power of terminal devices other than the terminal device in the second satellite network; and maximum value of admission power of terminal devices other than the terminal device in the second satellite network.

Optionally, the first information includes multiple first measurement results obtained by the terminal device through measuring reference signals of multiple beams of the second satellite network, and the multiple first measurement results are used to determine the first beam.

Optionally, the first measurement result corresponding to the first beam is the maximum value among the multiple first measurement results, or the largest M values among the multiple first measurement results.

Optionally, the first measurement result corresponding to the first beam is greater than the first threshold.

Optionally, the first resource is a reserved resource for satellite handover, and the second resource is a scheduled uplink resource for the terminal device to perform a satellite handover.

Optionally, after receiving the first information, the first transmitting unit 1120 is further configured to transmit second information to the first satellite network, where the second information is used to indicate the first beam. The network device 1100 further includes a second transmitting unit configured to transmit a downlink channel according to the first beam after transmitting a handover request acknowledge to the first satellite network.

Optionally, the first beam is indicated by an identifier of the reference signal associated with the first beam.

Optionally, the reference signal includes SSB-RS and/or CSI-RS.

Optionally, the first beam is also used to carry one or more synchronization signal blocks for satellite handover of the terminal device, and the index of one or more synchronization signal blocks is associated with the first resource.

Optionally, the first handover instruction is a RACH-less handover instruction.

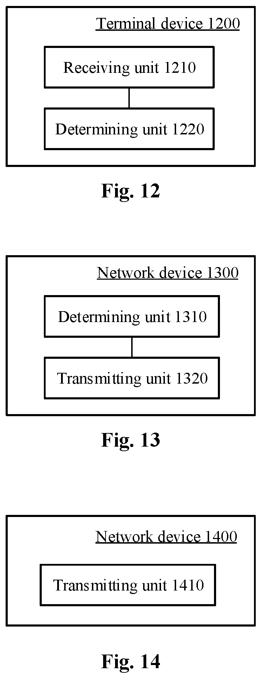

Fig. 12 is a schematic block diagram of another terminal device provided in the embodiments of the present application. The terminal device 1200 may be any of the terminal devices described above. The terminal device 1200 shown in Fig. 12 includes a receiving unit 1210 and a determining unit 1220.

The receiving unit 1210 is configured to receive a first handover instruction, where the first handover instruction is used to instruct the terminal device to perform a satellite handover from a coverage area of a first satellite network to a coverage area of a second satellite network, where the first handover instruction includes power-related information within the coverage area of the second satellite network and/or relative position information between a second satellite corresponding to the second satellite network and the terminal device.

The determining unit 1220 is configured to determine, according to the first handover instruction, a first power of uplink transmission to the second satellite network.

Optionally, the power-related information within the coverage area of the second satellite network includes one or more of the following parameters: average value of signal quality of some or all of the uplink beams for access within the coverage area; maximum value of signal quality of some or all of the uplink beams for access within the coverage area; transmit power of at least some of the terminal devices already accessed within the area for transmitting the random access uplink channels; average value of admission power of terminal devices other than the terminal device in the second satellite network; maximum value of admission power of terminal devices other than the terminal device in the second satellite network; average path loss within the coverage area of the second satellite network; and maximum path loss within the coverage area of the second satellite network.

Optionally, the first power is determined based on the power-related information and the maximum output power of the terminal device.

Optionally, the signal quality is one or more of the following parameters: RSRP, RSRQ, and RSSI.

Optionally, the transmit power for transmitting random access uplink channels by at least some of the terminal devices already connected within the coverage area includes one or more of the following: transmit power for transmitting message A by at least some terminal devices; and transmit power for transmitting message 3 by at least some terminal devices.

Optionally, the relative position information is used to determine the path loss compensation factor of the terminal device in the second satellite network, and the relative position information includes one or more of the following: distance between the terminal device and the second satellite; and azimuth between the terminal device and the second satellite.

Optionally, the path loss compensation factor is determined based on the azimuth between the terminal device and the second satellite, and the path loss compensation factor K is determined according to the following formula:

$$K = \frac{cos\delta 1}{cos\delta 2};$$

where $\delta 1$ represents the azimuth between the terminal device and the first satellite corresponding to the first satellite network, and $\delta 2$ represents the azimuth between the terminal device and the second satellite.

Optionally, the first power (PPUSCH,b,f,c) of uplink transmission by the terminal device in a carrier f, with an uplink bandwidth b, of a serving cell c is determined according to the following formula:

$$P_{PUSCH,b,f,c}(i, j, q_d, l) =$$

$$min\begin{cases} P_{CMAX,f,c}(i) \\ P_{0_{PUSCH,b,f,c}}(j) + 10log_{10}(2^{\mu} * M_{RB,b,f,c}^{PUSCH}(i)) + K * \alpha_{b,f,c}(j) * PL_{b,f,c}(q_d) + \Delta_{TF,b,c,f}(i) + f_{b,f,c}(i, l) \end{cases};$$

where i represents a transmission occasion, j represents an index of parameter set configuration, qd represents an index of reference signal, l represent an index of power control adjustment state, μ is related to subcarrier spacing, $P_{CMAX,f,c}(i)$ represents the maximum output power of the terminal device in the second satellite network, $P_{0PUSCH,b,f,c}(j)$ represents the current transmit power of the terminal device in the first satellite network, $M_{RB,b,f,c}^{PUSCH}(i)$ represents the uplink resource bandwidth, $\alpha_{b,f,c}(j)$ represents the path loss compensation factor of the terminal device in the first satellite network, $PL_{b,f,c}(q_d)$ represents the downlink path loss, $\Delta_{TF,b,c,f}(i)$ represents the power adjustment amount, and $f_{b,f,c}(i, l)$ represents the power control adjustment state.

Optionally, the first handover instruction is a RACH-less handover instruction, and the power adjustment amount in the first power is determined based on a RACH-less power adjustment counter whose value is related to the parameters for the terminal device to access the first satellite network.

Optionally, the value of the power adjustment counter represents the number of access attempts made by the terminal device to establish a connection with the first satellite network.

Optionally, the power adjustment amount is also determined based on a power adjustment factor which is determined according to the service type of the terminal device.

Optionally, the first power (PPUSCH,b,f,c) of uplink transmission by the terminal device in a carrier f, with an uplink bandwidth b, of a serving cell c is determined according to the following formula:

$$P_{PUSCH,b,f,c}(i,j,q_d,l) =$$

$$min \begin{cases} P_{CMAX,f,c}(i) \\ P_{0PUSCH,b,f,c}(j) + 10log_{10}(2^{\mu} * M_{RB,b,f,c}^{PUSCH}(i)) + \alpha_{b,f,c}(j) * PL_{b,f,c}(q_d) + N * \Delta_{TF,b,c,f}(i) + f_{b,f,c}(i,l) \end{cases};$$

where N represents the power adjustment factor and N > 1.

Optionally, the first power (PPUSCH,b,f,c) of uplink transmission by the terminal device in a carrier f, with an uplink bandwidth b, of a serving cell c is determined according to the following formula:

$$P_{PUSCH,b,f,c}(i,j,q_d,l) =$$

$$min \begin{cases} P_{CMAX,f,c}(i) \\ P_{0PUSCH,b,f,c}(j) + 10log_{10}(2^{\mu} * M_{RB,b,f,c}^{PUSCH}(i)) + K * \alpha_{b,f,c}(j) * PL_{b,f,c}(q_d) + N * \Delta_{TF,b,c,f}(i) + f_{b,f,c}(i,l) \end{cases};$$

where K represents the path loss compensation factor, and N represents the power adjustment factor.

Fig. 13 is a schematic block diagram of yet another network device provided in the embodiments of the present application. The network device 1300 may be any of the network devices corresponding to the first satellite network described above. The network device 1300 shown in Fig. 13 includes a determining unit 1310 and a transmitting unit 1320.

The determining unit 1310 is configured to determine a first handover instruction according to a handover request acknowledge sent by a second satellite network, where the first handover instruction is used to instruct a terminal device to perform a satellite handover from a coverage area of the first satellite network to a coverage area of the second satellite network, where the first handover instruction includes power-related information within the coverage area of the second satellite network and/or relative position information between a second satellite corresponding to the second satellite network and the terminal device.

The transmitting unit 1320 is configured to transmit the first handover instruction to the terminal device, where the first handover instruction is used for the terminal device to determine a first power of uplink transmission to the second satellite network.

Optionally, the power-related information within the coverage area of the second satellite network includes one or more of the following parameters: average value of signal quality of some or all of the uplink beams for access within the coverage area; maximum value of signal quality of some or all of the uplink beams for access within the coverage area; transmit power of at least some of the terminal devices already accessed within the area for transmitting the random access uplink channels; average value of admission power of terminal devices other than the terminal device in the second satellite network; maximum value of admission power of terminal devices other than the terminal device in the second satellite network; average path loss within the coverage area of the second satellite network; and maximum path loss within the coverage area of the second satellite network.

Optionally, the first power is determined based on the power-related information and the maximum output power of the terminal device.

Optionally, the signal quality is one or more of the following parameters: RSRP, RSRQ, and RSSI.

Optionally, the transmit power for transmitting random access uplink channels by at least some of the terminal devices already connected within the coverage area includes one or more of the following: transmit power for transmitting message A by at least some terminal devices; and transmit power for transmitting message 3 by at least some terminal devices.

Optionally, the relative position information is used to determine the path loss compensation factor of the terminal device in the second satellite network, and the relative position information includes one or more of the following: distance between the terminal device and the second satellite; and azimuth between the terminal device and the second satellite.

Optionally, the path loss compensation factor is determined based on the azimuth between the terminal device and the second satellite, and the path loss compensation factor K is determined according to the following formula:

$$K = \frac{cos\delta 1}{cos\delta 2};$$

where δ1 represents the azimuth between the terminal device and the first satellite corresponding to the first satellite network, and δ2 represents the azimuth between the terminal device and the second satellite.

Optionally, the first power (PPUSCH,b,f,c) of uplink transmission by the terminal device in a carrier f, with an uplink bandwidth b, of a serving cell c is determined according to the following formula:

$$P_{PUSCH,b,f,c}(i,j,q_d,l) =$$

$$min \begin{cases} P_{CMAX,f,c}(i) \\ P_{0_{PUSCH,b,f,c}}(j) + 10log_{10}(2^\mu * M_{RB,b,f,c}^{PUSCH}(i)) + K * \alpha_{b,f,c}(j) * PL_{b,f,c}(q_d) + \Delta_{TF,b,c,f}(i) + f_{b,f,c}(i,l) \end{cases};$$

where i represents a transmission occasion, j represents an index of parameter set configuration, qd represents an index of reference signal, I represent an index of power control adjustment state, μ is related to subcarrier spacing, $P_{CMAX,f,c}(i)$ represents the maximum output power of the terminal device in the second satellite network, $P_{0_{PUSCH,b,f,c}}(j)$ represents the current transmit power of the terminal device in the first satellite network, $M_{RB,b,f,c}^{PUSCH}(i)$ represents the uplink resource bandwidth, $\alpha_{b,f,c}(j)$ represents the path loss compensation factor of the terminal device in the first satellite network, $PL_{b,f,c}(q_d)$ represents the downlink path loss, $\Delta_{TF,b,c,f}(i)$ represents the power adjustment amount, and $f_{b,f,c}(i, l)$ represents the power control adjustment state.

Optionally, the first handover instruction is a RACH-less handover instruction, and the power adjustment amount in the first power is determined based on a RACH-less power adjustment counter whose value is related to the parameters for the terminal device to access the first satellite network.

Optionally, the value of the power adjustment counter represents the number of access attempts made by the terminal device to establish a connection with the first satellite network.

Optionally, the power adjustment amount is also determined based on a power adjustment factor which is determined according to the service type of the terminal device.

Optionally, the first power (PPUSCH,b,f,c) of uplink transmission by the terminal device in a carrier f, with an uplink bandwidth b, of a serving cell c is determined according to the following formula:

$$P_{PUSCH,b,f,c}(i,j,q_d,l) =$$

$$min \begin{cases} P_{CMAX,f,c}(i) \\ P_{0_{PUSCH,b,f,c}}(j) + 10log_{10}(2^\mu * M_{RB,b,f,c}^{PUSCH}(i)) + \alpha_{b,f,c}(j) * PL_{b,f,c}(q_d) + N * \Delta_{TF,b,c,f}(i) + f_{b,f,c}(i,l) \end{cases};$$

where N represents the power adjustment factor and N > 1.

Optionally, the first power (PPUSCH,b,f,c) of uplink transmission by the terminal device in a carrier f, with an uplink bandwidth b, of a serving cell c is determined according to the following formula:

$$P_{PUSCH,b,f,c}(i,j,q_d,l) =$$

$$min \begin{cases} P_{CMAX,f,c}(i) \\ P_{0_{PUSCH,b,f,c}}(j) + 10log_{10}(2^\mu * M_{RB,b,f,c}^{PUSCH}(i)) + K * \alpha_{b,f,c}(j) * PL_{b,f,c}(q_d) + N * \Delta_{TF,b,c,f}(i) + f_{b,f,c}(i,l) \end{cases};$$

where K represents the path loss compensation factor, and N represents the power adjustment factor.

Fig. 14 is a schematic block diagram of yet another network device provided in the embodiments of the present application. The network device 1400 may be any of the network devices corresponding to the second satellite network described above. The network device 1400 shown in Fig. 14 includes a transmitting unit 1410.

The transmitting unit 1410 is configured to transmit a handover request acknowledge to a first satellite network, where the handover request acknowledge is used for the first satellite network to determine a first handover instruction, and the first handover instruction is used to instruct a terminal device to perform a satellite handover from a coverage area of the first satellite network to a coverage area of the second satellite network;

where the first handover instruction includes power-related information within the coverage area of the second satellite network and/or relative position information between a second satellite corresponding to the second satellite network and the terminal device, and the first handover instruction is used for the terminal device to determine a first power of uplink transmission to the second satellite network.

Optionally, the power-related information within the coverage area of the second satellite network includes one or more of the following parameters: average value of signal quality of some or all of the uplink beams for access within the coverage area; maximum value of signal quality of some or all of the uplink beams for access within the coverage area; transmit power of at least some of the terminal devices already accessed within the area for transmitting the random access uplink channels; average value of admission power of terminal devices other than the terminal device in the second satellite network; maximum value of admission power of terminal devices other than the terminal device in the second satellite network; average path loss within the coverage area of the second satellite network; and maximum path loss within the coverage area of the second satellite network.

Optionally, the first power is determined based on the power-related information and the maximum output power of the terminal device. Optionally, the signal quality is one or more of the following parameters: RSRP, RSRQ, and RSSI.

Optionally, the transmit power for transmitting random access uplink channels by at least some of the terminal devices already connected within the coverage area includes one or more of the following: transmit power for transmitting message A by at least some terminal devices; and transmit power for transmitting message 3 by at least some terminal devices.

Optionally, the relative position information is used to determine the path loss compensation factor of the terminal device in the second satellite network, and the relative position information includes one or more of the following: distance between the terminal device and the second satellite; and azimuth between the terminal device and the second satellite.

Optionally, the path loss compensation factor is determined based on the azimuth between the terminal device and the second satellite, and the path loss compensation factor K is determined according to the following formula:

$$K = \frac{cos\delta1}{cos\delta2};$$

where $\delta1$ represents the azimuth between the terminal device and the first satellite corresponding to the first satellite network, and $\delta2$ represents the azimuth between the terminal device and the second satellite.

Optionally, the first power (PPUSCH,b,f,c) of uplink transmission by the terminal device in a carrier f, with an uplink bandwidth b, of a serving cell c is determined according to the following formula:

$$P_{PUSCH,b,f,c}(i,j,q_d,l) =$$

$$min \begin{cases} P_{CMAX,f,c}(i) \\ P_{0_{PUSCH,b,f,c}}(j) + 10log_{10}(2^\mu * M_{RB,b,f,c}^{PUSCH}(i)) + K * \alpha_{b,f,c}(j) * PL_{b,f,c}(q_d) + \Delta_{TF,b,c,f}(i) + f_{b,f,c}(i,l) \end{cases};$$

where i represents a transmission occasion, j represents an index of parameter set configuration, qd represents an index of reference signal, I represent an index of power control adjustment state, $\mu$ is related to subcarrier spacing, $P_{CMAX,f,c}(i)$ represents the maximum output power of the terminal device in the second satellite network, $P_{0_{PUSCH,b,f,c}}(j)$ represents the current transmit power of the terminal device in the first satellite network, $M_{RB,b,f,c}^{PUSCH}(i)$ represents the uplink resource bandwidth, $\alpha_{b,f,c}(j)$ represents the path loss compensation factor of the terminal device in the first satellite network, $PL_{b,f,c}(q_d)$ represents the downlink path loss, $\Delta_{TF,b,c,f}(i)$ represents the power adjustment amount, and $f_{b,f,c}(i, l)$ represents the power control adjustment state.

Optionally, the first handover instruction is a RACH-less handover instruction, and the power adjustment amount in the first power is determined based on a RACH-less power adjustment counter whose value is related to the parameters for the terminal device to access the first satellite network.

Optionally, the value of the power adjustment counter represents the number of access attempts made by the terminal device to establish a connection with the first satellite network.

Optionally, the power adjustment amount is also determined based on a power adjustment factor which is determined according to the service type of the terminal device.

Optionally, the first power (PPUSCH,b,f,c) of uplink transmission by the terminal device in a carrier f, with an uplink bandwidth b, of a serving cell c is determined according to the following formula:

$$P_{PUSCH,b,f,c}(i,j,q_d,l) =$$

$$min \begin{cases} P_{CMAX,f,c}(i) \\ P_{0_{PUSCH,b,f,c}}(j) + 10log_{10}(2^\mu * M_{RB,b,f,c}^{PUSCH}(i)) + \alpha_{b,f,c}(j) * PL_{b,f,c}(q_d) + N * \Delta_{TF,b,c,f}(i) + f_{b,f,c}(i,l) \end{cases};$$

where N represents the power adjustment factor and N > 1.

Optionally, the first power (PPUSCH,b,f,c) of uplink transmission by the terminal device in a carrier f, with an uplink bandwidth b, of a serving cell c is determined according to the following formula:

$$P_{PUSCH,b,f,c}(i,j,q_d,l) =$$

$$min \begin{cases} P_{CMAX,f,c}(i) \\ P_{0_{PUSCH,b,f,c}}(j) + 10log_{10}(2^\mu * M_{RB,b,f,c}^{PUSCH}(i)) + K * \alpha_{b,f,c}(j) * PL_{b,f,c}(q_d) + N * \Delta_{TF,b,c,f}(i) + f_{b,f,c}(i,l) \end{cases};$$

where K represents the path loss compensation factor, and N represents the power adjustment factor.

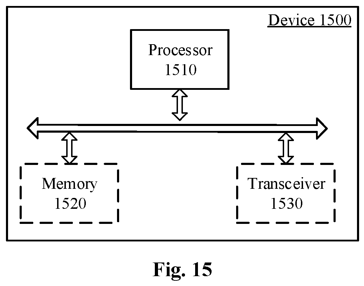

Fig. 15 is a schematic structural view of a communication device in the embodiments of the present application. The dashed line in Fig. 15 indicates that the unit or module is optional. The device 1500 can be configured to implement the method described in the above method embodiments. The device 1500 may be a chip, terminal device, or network device.

The device 1500 may include one or more processors 1510. The processor 1510 can support the device 1500 to implement the method described in the previous method embodiments. The processor 1510 may be a general-purpose processor or a dedicated processor. For example, the processor may be a central processing unit (CPU). Alternatively, the processor may also be other general-purpose processor, digital signal processor (DSP), application specific integrated circuits (ASIC), field programmable gate array (FPGA) or other programmable logic device, discrete gate or transistor logic device, discrete hardware component, etc. The general-purpose processor may be a microprocessor or any conventional processor.

The device 1500 may also include one or more memories 1520. The memory 1520 stores a program that can be executed by the processor 1510, enabling the processor 1510 to perform the method described in the previous method embodiments. The memory 1520 may be independent of the processor 1510 or integrated into the processor 1510.

The device 1500 may also include a transceiver 1530. The processor 1510 may communicate with other devices or chips through the transceiver 1530. For example, the processor 1510 can exchange data with other devices or chips through the transceiver 1530.

The embodiments of the present application also provide a computer-readable storage medium for storing a program. The computer-readable storage medium can be applied to the terminal or network device provided in the embodiments of the present application, and the program stored therein enables the computer to execute the method executable by the terminal or network device in the embodiments of the present application.

The computer-readable storage medium can be any available medium that a computer can read, or a data storage device such as a server or data center that integrates one or more available media. The available medium may be magnetic medium (such as floppy disk, hard disk, magnetic tape), optical medium (such as digital video disc (DVD)), or semiconductor medium (such as solid state disk (SSD)).

The embodiments of the present application also provide a computer program product. The computer program product includes a program. The computer program product can be applied to the terminal or network device provided in the embodiments of the present application, and the program included therein enables the computer to execute the method executable by the terminal or network device in the embodiments of the present application.

In the above embodiments, the functional units can be fully or partially implemented through software, hardware, firmware, or any combination thereof. When implemented using software, the units can be fully or partially implemented in the form of a computer program product. The computer program product includes one or more computer instructions. When loading and executing the computer program instructions in a computer, all or part of the processes or functions described in the embodiments of the present application are generated. The computer may be a general-purpose computer, a dedicated computer, a computer network, or other programmable device. The computer instructions may be stored in a computer-readable storage medium or transmitted from one computer-readable storage medium to another. For example, the computer instructions may be transmitted from a website site, computer, server, or data center to another website site, computer, server, or data center via wired (such as coaxial cable, fiber optic, digital subscriber line (DSL)) or wireless (such as infrared, wireless, microwave, etc.) means.

The embodiments of the present application also provide a computer program. The computer program can be applied to the terminal or network device provided in the embodiments of the present application, and enables the computer to execute the method executable by the terminal or network device in the embodiments of the present application.

The terms "system" and "network" in the present application can be used interchangeably. In addition, the terms used in the present application are only for explaining the specific embodiments of the present application, and are not intended to limit the present application. The terms "first," "second," "third," and "fourth" used in the specification, claims, and accompanying drawings of the present application are intended to distinguish different objects and not to describe a specific order. In addition, the terms "include" and "have", as well as any variations thereof, are intended to cover non-exclusive inclusions.

In the embodiments of the present application, the term "indication" may be a direct indication, an indirect indication, or a representation of an associated relationship. For example, A indicates B, which may mean that A directly indicates B. For example, B can be obtained through A; which may also mean that A indirectly indicates B, for example, A indicates C, and B can be obtained through C; which may also mean that there is a correlation between A and B.

In the embodiments of the present application, the term "corresponding" may indicate a direct or indirect correspondence relationship between two objects, an association relationship between the two objects, or a relationship of indicating and being indicated, configuring and being configured.

In the embodiments of the present application, "being pre-defined" or "being pre-configured" can be implemented by pre-storing corresponding codes or tables in devices (for example, including terminal devices and network devices) or other ways that can be used for indicating relevant information. The specific implementation method therefor is not limited in the present application. For example, being pre-defined may refer to being defined in a protocol.

In the embodiments of the present application, the term "protocol" may refer to standard protocols in the field of communication, such as LTE protocol, NR protocol, and related protocols applied in future communication systems, which is not limited in the present application.

In the embodiments of the present application, determining B according to A does not mean determining B solely according to A, but mean that B can be determined according to A and/or other information.

The term "and/or" in the embodiments of the present application only describes the association relationship between related objects, indicating that there may exist three types of relationships. For example, A and/or B may cover the following three situations: A exists alone, A and B exist simultaneously, and B exists alone. In addition, the character "/" in this paper generally indicates that the related objects before and after the "/" are in an "or" relationship.

In the embodiments of the present application, the sequence numbers of the above processes do not imply the order of execution and should not constitute any limitation on the implementation process of the embodiments of the present application. The order of execution of each process should be determined by its function and internal logic.

In the several embodiments provided in the present application, it should be understood that the disclosed systems, devices, and methods can be implemented in other ways. For example, the device embodiments described above are only illustrative. For example, the division of units is only a division in accordance with logical function. In practical implementation, there may be other division methods. For example, multiple units or components may be combined or integrated into another system, or some features may be ignored or not executed. On the other hand, the mutual coupling or direct coupling or communication connection shown or discussed may be indirect coupling or communication connection through some interfaces, devices or units, which can be electrical, mechanical or in other forms.

The units described as separate components may or may not be physically separated, and the components shown as units may or may not be physical units, i.e., these components may be located in one place or distributed across multiple network units. Some or all of the units can be selected according to actual needs to achieve the purpose of the embodiments.

In addition, the functional units in various embodiments of the present application may be integrated into one processing unit, may physically exist separately, or, two or more of the functional units may be integrated into one unit.

The above only describes specific implementation of the present application, but the scope of protection of the present application is not limited thereto. Any skilled person familiar with the technical field can easily conceive changes or replacements within the technical scope disclosed by the present application. These changes or replacements should be covered in the scope of protection of the present application. Therefore, the scope of protection of the present application shall be subject to the scope of protection of the appended claims.

**Claims**

1. A satellite handover method for a non-terrestrial network, applicable to satellite handover from a coverage area of a first satellite network to a coverage area of a second satellite network, wherein the method comprises:

   receiving a first handover instruction, wherein the first handover instruction comprises power-related information within the coverage area of the second satellite network and/or relative position information between a second satellite corresponding to the second satellite network and a terminal device; and

determining, according to the first handover instruction, a first power of uplink transmission to the second satellite network.

2. The method according to claim 1, wherein the power-related information within the coverage area of the second satellite network comprises one or more of the following parameters:

average value of signal quality of some or all of the uplink beams for access within the coverage area;

maximum value of signal quality of some or all of the uplink beams for access within the coverage area;

transmit power of at least some of the terminal devices already accessed within the area for transmitting the random access uplink channels;

average value of admission power of terminal devices other than the terminal device in the second satellite network;

maximum value of admission power of terminal devices other than the terminal device in the second satellite network;

average path loss within the coverage area of the second satellite network; and

maximum path loss within the coverage area of the second satellite network.

3. The method according to claim 2, wherein the first power is determined based on the power-related information and a maximum output power of the terminal device.

4. The method according to claim 2 or 3, wherein the signal quality is one or more of the following parameters: reference signal received power (RSRP), reference signal received quality (RSRQ), and reference signal strength indication (RSSI).

5. The method according to claim 2 or 3, wherein transmit power for transmitting random access channels by at least some terminal devices already connected within the coverage area comprises one or more of the following:

transmit power for transmitting message A by the at least some terminal devices; and

transmit power for transmitting message 3 by the at least some terminal devices.

6. The method according to any one of claims 1 to 5, wherein the relative position information is used to determine a path loss compensation factor of the terminal device in the second satellite network, and the relative position information comprises one or more of the following:

distance between the terminal device and the second satellite; and

azimuth between the terminal device and the second satellite.

7. The method according to claim 6, wherein the path loss compensation factor is determined based on the azimuth between the terminal device and the second satellite, and the path loss compensation factor K is determined according to the following formula:

$$K = \frac{cos\delta1}{cos\delta2};$$

wherein $\delta1$ represents the azimuth between the terminal device and a first satellite corresponding to the first satellite network, and $\delta2$ represents the azimuth between the terminal device and the second satellite.

8. The method according to claim 7, wherein the first power ($P_{PUSCH,b,f,c}$) of uplink transmission by the terminal device in a carrier f, with an uplink bandwidth b, of a serving cell c is determined according to the following formula:

$$P_{PUSCH,b,f,c}(i,j,q_d,l) =$$

$$min \begin{cases} P_{CMAX,f,c}(i) \\ P_{0_{PUSCH,b,f,c}}(j) + 10log_{10}(2^\mu * M_{RB,b,f,c}^{PUSCH}(i)) + K * \alpha_{b,f,c}(j) * PL_{b,f,c}(q_d) + \Delta_{TF,b,c,f}(i) + f_{b,f,c}(i,l) \end{cases};$$

wherein i represents a transmission occasion, j represents an index of parameter set configuration, qd represents an index of reference signal, I represent an index of power control adjustment state, $\mu$ is related to subcarrier spacing, $P_{CMAX,f,c}(i)$ represents the maximum output power of the terminal device in the second satellite network, $P_{0_{PUSCH,b,f,c}}(j)$ represents the current transmit power of the terminal device in the first satellite network, $M_{RB,b,f,c}^{PUSCH}(i)$ represents an uplink resource bandwidth, $\alpha_{b,f,c}(j)$ represents a path loss compensation factor of the terminal device in the first satellite network, $PL_{b,f,c}(q_d)$ represents a downlink path loss, $\Delta_{TF,b,c,f}(i)$ represents a power adjustment amount, and $f_{b,f,c}(i, l)$ represents a power control adjustment state.

9. The method according to any one of claims 1 to 8, wherein the first handover instruction is a RACH-less handover instruction, and the power adjustment amount in the first power is determined based on a RACH-less power adjustment counter whose value is related to parameters for the terminal device to access the first satellite network.

10. The method according to claim 9, wherein the value of the power adjustment counter represents the number of access attempts made by the terminal device to establish a connection with the first satellite network.

11. The method according to claim 9 or 10, wherein the power adjustment amount is further determined based on a power adjustment factor which is determined according to a service type of the terminal device.

12. The method according to claim 11, wherein the first power (PPUSCH,b,f,c) of uplink transmission by the terminal device in a carrier f, with an uplink bandwidth b, of a serving cell c is determined according to the following formula:

$$P_{PUSCH,b,f,c}(i,j,q_d,l) =$$

$$min \begin{cases} P_{CMAX,f,c}(i) \\ P_{0_{PUSCH,b,f,c}}(j) + 10log_{10}(2^\mu * M_{RB,b,f,c}^{PUSCH}(i)) + \alpha_{b,f,c}(j) * PL_{b,f,c}(q_d) + N * \Delta_{TF,b,c,f}(i) + f_{b,f,c}(i,l) \end{cases};$$

wherein N represents the power adjustment factor and N > 1.

13. The method according to claim 12, wherein the first power (PPUSCH,b,f,c) of uplink transmission by the terminal device in a carrier f, with an uplink bandwidth b, of a serving cell c is determined according to the following formula:

$$P_{PUSCH,b,f,c}(i,j,q_d,l) =$$

$$min \begin{cases} P_{CMAX,f,c}(i) \\ P_{0_{PUSCH,b,f,c}}(j) + 10log_{10}(2^\mu * M_{RB,b,f,c}^{PUSCH}(i)) + K * \alpha_{b,f,c}(j) * PL_{b,f,c}(q_d) + N * \Delta_{TF,b,c,f}(i) + f_{b,f,c}(i,l) \end{cases};$$

wherein K represents the path loss compensation factor, and N represents the power adjustment factor.

14. A satellite handover method for a non-terrestrial network, applicable to satellite handover from a coverage area of a first satellite network to a coverage area of a second satellite network, wherein the method comprises:

determining, according to a handover request acknowledge sent by the second satellite network, a first handover instruction, wherein the first handover instruction comprises power-related information within the coverage area of the second satellite network and/or relative position information between a second satellite corresponding to the second satellite network and a terminal device; and
transmitting the first handover instruction to the terminal device, wherein the first handover instruction is used for the terminal device to determine a first power of uplink transmission to the second satellite network.

15. The method according to claim 14, wherein the power-related information within the coverage area of the second satellite network comprises one or more of the following parameters:

average value of signal quality of some or all of the uplink beams for access within the coverage area;
maximum value of signal quality of some or all of the uplink beams for access within the coverage area;
transmit power of at least some of the terminal devices already accessed within the area for transmitting the random access uplink channels;

average value of admission power of terminal devices other than the terminal device in the second satellite network;

maximum value of admission power of terminal devices other than the terminal device in the second satellite network;

average path loss within the coverage area of the second satellite network; and

maximum path loss within the coverage area of the second satellite network.

16. The method according to claim 14 or 15, wherein the relative position information is used to determine a path loss compensation factor of the terminal device in the second satellite network, and the relative position information comprises one or more of the following:

distance between the terminal device and the second satellite; and

azimuth between the terminal device and the second satellite.

17. The method according to any one of claims 14 to 16, wherein the first handover instruction is a RACH-less handover instruction, and the power adjustment amount in the first power is determined based on a RACH-less power adjustment counter whose value is related to parameters for the terminal device to access the first satellite network.

18. A satellite handover method for a non-terrestrial network, applicable to satellite handover from a coverage area of a first satellite network to a coverage area of a second satellite network, wherein the method comprises:

transmitting a handover request acknowledge to the first satellite network, wherein the handover request acknowledge is used for the first satellite network to determine a first handover instruction;

wherein the first handover instruction comprises power-related information within the coverage area of the second satellite network and/or relative position information between a second satellite corresponding to the second satellite network and the terminal device, and the first handover instruction is used for the terminal device to determine a first power of uplink transmission to the second satellite network.

19. The method according to claim 18, wherein the power-related information within the coverage area of the second satellite network comprises one or more of the following parameters:

average value of signal quality of some or all of the uplink beams for access within the coverage area;

maximum value of signal quality of some or all of the uplink beams for access within the coverage area;

transmit power of at least some of the terminal devices already accessed within the area for transmitting the random access uplink channels;

average value of admission power of terminal devices other than the terminal device in the second satellite network;

maximum value of admission power of terminal devices other than the terminal device in the second satellite network;

average path loss within the coverage area of the second satellite network; and

maximum path loss within the coverage area of the second satellite network.

20. The method according to claim 19, wherein the first power is determined based on the power-related information and a maximum output power of the terminal device.

21. The method according to claim 19 or 20, wherein terminal transmit power for transmitting random access channels by at least some terminal devices already connected within the coverage area comprises one or more of the following:

transmit power for transmitting message A by the at least some terminal devices; and

transmit power for transmitting message 3 by the at least some terminal devices.

22. The method according to any one of claims 19 to 21, wherein the relative position information is used to determine a path loss compensation factor of the terminal device in the second satellite network, and the relative position information comprises one or more of the following:

distance between the terminal device and the second satellite; and

azimuth between the terminal device and the second satellite.

23. The method according to claim 22, wherein the path loss compensation factor is determined based on the azimuth between the terminal device and the second satellite, and the path loss compensation factor K is determined according to the following formula:

$$K = \frac{cos\delta1}{cos\delta2};$$

wherein $\delta1$ represents the azimuth between the terminal device and a first satellite corresponding to the first satellite network, and $\delta2$ represents the azimuth between the terminal device and the second satellite.

24. The method according to any one of claims 19 to 23, wherein the first handover instruction is a RACH-less handover instruction, and the power adjustment amount in the first power is determined based on a RACH-less power adjustment counter whose value is related to parameters for the terminal device to access the first satellite network.

25. A terminal device, comprising:

a receiving unit, configured to receive a first handover instruction, wherein the first handover instruction is used to instruct the terminal device to perform a satellite handover from a coverage area of a first satellite network to a coverage area of a second satellite network, wherein the first handover instruction comprises power-related information within the coverage area of the second satellite network and/or relative position information between a second satellite corresponding to the second satellite network and the terminal device; and
a determining unit, configured to determine, according to the first handover instruction, a first power of uplink transmission to the second satellite network.

26. The terminal device according to claim 25, wherein the power-related information within the coverage area of the second satellite network comprises one or more of the following parameters:

average value of signal quality of some or all of the uplink beams for access within the coverage area;
maximum value of signal quality of some or all of the uplink beams for access within the coverage area;
transmit power of at least some of the terminal devices already accessed within the area for transmitting the random access uplink channels;
average value of admission power of terminal devices other than the terminal device in the second satellite network;
maximum value of admission power of terminal devices other than the terminal device in the second satellite network;
average path loss within the coverage area of the second satellite network; and
maximum path loss within the coverage area of the second satellite network.

27. The terminal device according to claim 26, wherein the first power is determined based on the power-related information and a maximum output power of the terminal device.

28. The terminal device according to claim 26 or 27, wherein the signal quality is one or more of the following parameters: reference signal received power (RSRP), reference signal received quality (RSRQ), and reference signal strength indication (RSSI).

29. The terminal device according to claim 26 or 27, wherein transmit power for transmitting random access uplink channels by at least some terminal devices already connected within the coverage area comprises one or more of the following:

transmit power for transmitting message A by the at least some terminal devices; and
transmit power for transmitting message 3 by the at least some terminal devices.

30. The terminal device according to any one of claims 25 to 29, wherein the relative position information is used to determine a path loss compensation factor of the terminal device in the second satellite network, and the relative position information comprises one or more of the following:

distance between the terminal device and the second satellite; and
azimuth between the terminal device and the second satellite.

31. The terminal device according to claim 30, wherein the path loss compensation factor is determined based on the azimuth between the terminal device and the second satellite, and the path loss compensation factor K is determined according to the following formula:

$$K = \frac{cos\delta1}{cos\delta2};$$

wherein $\delta1$ represents the azimuth between the terminal device and a first satellite corresponding to the first satellite network, and $\delta2$ represents the azimuth between the terminal device and the second satellite.

32. The terminal device according to claim 31, wherein the first power (PPUSCH,b,f,c) of uplink transmission by the terminal device in a carrier f, with an uplink bandwidth b, of a serving cell c is determined according to the following formula:

$$P_{PUSCH,b,f,c}(i,j,q_d,l) =$$

$$min\begin{cases} P_{CMAX,f,c}(i) \\ P_{0_{PUSCH,b,f,c}}(j) + 10log_{10}(2^{\mu} * M_{RB,b,f,c}^{PUSCH}(i)) + K * \alpha_{b,f,c}(j) * PL_{b,f,c}(q_d) + \Delta_{TF,b,c,f}(i) + f_{b,f,c}(i,l) \end{cases};$$

wherein i represents a transmission occasion, j represents an index of parameter set configuration, qd represents an index of reference signal, I represent an index of power control adjustment state, $\mu$ is related to subcarrier spacing, $P_{CMAX,f,c}(i)$ represents the maximum output power of the terminal device in the second satellite network, $P_{0_{PUSCH,b,f,c}}(j)$ represents the current transmit power of the terminal device in the first satellite network, $M_{RB,b,f,c}^{PUSCH}(i)$ ) represents an uplink resource bandwidth, $\alpha_{b,f,c}(j)$ represents a path loss compensation factor of the terminal device in the first satellite network, $PL_{b,f,c}(q_d)$ represents a downlink path loss, $\Delta_{TF,b,c,f}(i)$ represents a power adjustment amount, and $f_{b,f,c}(i, l)$ represents a power control adjustment state.

33. The terminal device according to any one of claims 25 to 32, wherein the first handover instruction is a RACH-less handover instruction, and the power adjustment amount in the first power is determined based on a RACH-less power adjustment counter whose value is related to parameters for the terminal device to access the first satellite network.

34. The terminal device according to claim 33, wherein the value of the power adjustment counter represents the number of access attempts made by the terminal device to establish a connection with the first satellite network.

35. The terminal device according to claim 33 or 34, wherein the power adjustment amount is further determined based on a power adjustment factor which is determined according to a service type of the terminal device.

36. The terminal device according to claim 35, wherein the first power (PPUSCH,b,f,c) of uplink transmission by the terminal device in a carrier f, with an uplink bandwidth b, of a serving cell c is determined according to the following formula:

$$P_{PUSCH,b,f,c}(i,j,q_d,l) =$$

$$min\begin{cases} P_{CMAX,f,c}(i) \\ P_{0_{PUSCH,b,f,c}}(j) + 10log_{10}(2^{\mu} * M_{RB,b,f,c}^{PUSCH}(i)) + \alpha_{b,f,c}(j) * PL_{b,f,c}(q_d) + N * \Delta_{TF,b,c,f}(i) + f_{b,f,c}(i,l) \end{cases};$$

wherein N represents the power adjustment factor and N > 1.

37. The terminal device according to claim 36, wherein the first power (PPUSCH,b,f,c) of uplink transmission by the terminal device in a carrier f, with an uplink bandwidth b, of a serving cell c is determined according to the following formula:

$$P_{PUSCH,b,f,c}(i,j,q_d,l) =$$

$$min \begin{cases} P_{CMAX,f,c}(i) \\ P_{0_{PUSCH,b,f,c}}(j) + 10log_{10}(2^{\mu} * M_{RB,b,f,c}^{PUSCH}(i)) + K * \alpha_{b,f,c}(j) * PL_{b,f,c}(q_d) + N * \Delta_{TF,b,c,f}(i) + f_{b,f,c}(i,l) \end{cases};$$

wherein K represents the path loss compensation factor, and N represents the power adjustment factor.

38. A network device, wherein the network device is a network device corresponding to a first satellite network, and comprises:

> a determining unit, configured to determine a first handover instruction according to a handover request acknowledge sent by a second satellite network, wherein the first handover instruction is used to instruct a terminal device to perform a satellite handover from a coverage area of the first satellite network to a coverage area of the second satellite network, wherein the first handover instruction comprises power-related information within the coverage area of the second satellite network and/or relative position information between a second satellite corresponding to the second satellite network and the terminal device; and
> a transmitting unit, configured to transmit the first handover instruction to the terminal device, wherein the first handover instruction is used for the terminal device to determine a first power of uplink transmission to the second satellite network.

39. The network device according to claim 38, wherein the power-related information within the coverage area of the second satellite network comprises one or more of the following parameters:

> average value of signal quality of some or all of the uplink beams for access within the coverage area;
> maximum value of signal quality of some or all of the uplink beams for access within the coverage area;
> transmit power of at least some of the terminal devices already accessed within the area for transmitting the random access uplink channels;
> average value of admission power of terminal devices other than the terminal device in the second satellite network;
> maximum value of admission power of terminal devices other than the terminal device in the second satellite network;
> average path loss within the coverage area of the second satellite network; and
> maximum path loss within the coverage area of the second satellite network.

40. The network device according to claim 38 or 39, wherein the relative position information is used to determine a path loss compensation factor of the terminal device in the second satellite network, and the relative position information comprises one or more of the following:

> distance between the terminal device and the second satellite; and
> azimuth between the terminal device and the second satellite.

41. The network device according to any one of claims 38 to 40, wherein the first handover instruction is a RACH-less handover instruction, and the power adjustment amount in the first power is determined based on a RACH-less power adjustment counter whose value is related to parameters for the terminal device to access the first satellite network.

42. A network device, wherein the network device is a network device corresponding to a second satellite network, and comprises:

> a transmitting unit, configured to transmit a handover request acknowledge to a first satellite network, wherein the handover request acknowledge is used for the first satellite network to determine a first handover instruction, and the first handover instruction is used to instruct a terminal device to perform a satellite handover from a coverage area of the first satellite network to a coverage area of the second satellite network;
> wherein the first handover instruction comprises power-related information within the coverage area of the second satellite network and/or relative position information between a second satellite corresponding to the second satellite network and the terminal device, and the first handover instruction is used for the terminal device to determine a first power of uplink transmission to the second satellite network.

43. The network device according to claim 42, wherein the power-related information within the coverage area of the second satellite network comprises one or more of the following parameters:

average value of signal quality of some or all of the uplink beams for access within the coverage area;
maximum value of signal quality of some or all of the uplink beams for access within the coverage area;
transmit power of at least some of the terminal devices already accessed within the area for transmitting the random access uplink channels;
average value of admission power of terminal devices other than the terminal device in the second satellite network;
maximum value of admission power of terminal devices other than the terminal device in the second satellite network;
average path loss within the coverage area of the second satellite network; and
maximum path loss within the coverage area of the second satellite network.

44. The network device according to claim 43, wherein the first power is determined based on the power-related information and a maximum output power of the terminal device.

45. The network device according to claim 43 or 44, wherein terminal transmit power for transmitting random access channels by at least some terminal devices already connected within the coverage area comprises one or more of the following:

transmit power for transmitting message A by the at least some terminal devices; and
transmit power for transmitting message 3 by the at least some terminal devices.

46. The network device according to any one of claims 42 to 45, wherein the relative position information is used to determine a path loss compensation factor of the terminal device in the second satellite network, and the relative position information comprises one or more of the following:

distance between the terminal device and the second satellite; and
azimuth between the terminal device and the second satellite.

47. The network device according to claim 46, wherein the path loss compensation factor is determined based on the azimuth between the terminal device and the second satellite, and the path loss compensation factor K is determined according to the following formula:

$$K = \frac{cos\delta 1}{cos\delta 2};$$

wherein $\delta 1$ represents the azimuth between the terminal device and a first satellite corresponding to the first satellite network, and $\delta 2$ represents the azimuth between the terminal device and the second satellite.

48. The network device according to any one of claims 42 to 47, wherein the first handover instruction is a RACH-less handover instruction, and the power adjustment amount in the first power is determined based on a RACH-less power adjustment counter whose value is related to parameters for the terminal device to access the first satellite network.

49. A communication device, comprising a memory and a processor, wherein the memory is configured to store a program, and the processor is configured to call the program in the memory to implement the method according to any one of claims 1 to 24.

50. A device, comprising a processor configured to call a program from a memory to implement the method according to any one of claims 1 to 24.

51. A chip, comprising a processor configured to call a program from a memory to enable a device installed with the chip to implement the method according to any one of claims 1 to 24.

52. A computer-readable storage medium, wherein a program is stored thereon, and the program enables a computer to implement the method according to any one of claims 1 to 24.

**53.** A computer program product, comprising a program, wherein the program enables a computer to implement the method according to any one of claims 1 to 24.

**54.** A computer program, wherein the computer program enables a computer to implement the method according to any one of claims 1 to 24.

100

110

120

120

**Fig. 1**

200

210

220

240

230

250

260

**Fig. 2**

300

310

312

320

340

330

350

360

**Fig. 3**

Receive a first handover instruction ⎯ S410

Determine a first power of uplink transmission to the second satellite network ⎯ S420

**Fig. 4**

510    520

δ1    D1    D2    δ2

530

**Fig. 5**

| Terminal device | First satellite network | Second satellite network |

S610 First information    S620 First information

S630 First handover instruction

**Fig. 6**

Fig. 7

Fig. 8

Terminal device 900

Transmitting unit 910

First receiving unit 920

**Fig. 9**

Network device 1000

Receiving unit 1010

First transmitting unit 1020

Second transmitting unit 1030

**Fig. 10**

Network device 1100

Receiving unit 1110

First transmitting unit 1120

**Fig. 11**

Terminal device 1200

Receiving unit 1210

Determining unit 1220

**Fig. 12**

Network device 1300

Determining unit 1310

Transmitting unit 1320

**Fig. 13**

Network device 1400

Transmitting unit 1410

**Fig. 14**

**Fig. 15**

## INTERNATIONAL SEARCH REPORT

| International application No. |
| --- |
| **PCT/CN2023/116146** |

| A. | CLASSIFICATION OF SUBJECT MATTER |
| --- | --- |

H04W 36/08(2009.01)i

According to International Patent Classification (IPC) or to both national classification and IPC

| B. | FIELDS SEARCHED |
| --- | --- |

Minimum documentation searched (classification system followed by classification symbols)

H04W, H04L

Documentation searched other than minimum documentation to the extent that such documents are included in the fields searched

Electronic data base consulted during the international search (name of data base and, where practicable, search terms used)

CNTXT, DWPI, ENTXT, VEN, WPABS, 3GPP: 非地面网络, 功率, 切换, 无随机接入, 位置, 卫星, 终端, NTN, power, handover, no random access, location, position, satellite, terminal

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2023123474 A1 (BEIJING XIAOMI MOBILE SOFTWARE CO., LTD. et al.) 06 July 2023 (2023-07-06) description, pages 7-20 | 1-54 |
| A | CN 112788723 A (HUAWEI TECHNOLOGIES CO., LTD.) 11 May 2021 (2021-05-11) entire document | 1-54 |
| A | CN 115915007 A (DATANG MOBILE COMMUNICATIONS EQUIPMENT CO., LTD.) 04 April 2023 (2023-04-04) entire document | 1-54 |
| A | US 2019150096 A1 (LG ELECTRONICS INC.) 16 May 2019 (2019-05-16) entire document | 1-54 |
| A | US 2021136641 A1 (MEDIATEK SINGAPORE PTE. LTD.) 06 May 2021 (2021-05-06) entire document | 1-54 |
| A | US 2022174610 A1 (HUAWEI TECHNOLOGIES CO., LTD.) 02 June 2022 (2022-06-02) entire document | 1-54 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **15 May 2024** | **21 May 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/116146**

| Patent document cited in search report | | | Publication date (day/month/year) | Patent family member(s) | | | Publication date (day/month/year) |
|---|---|---|---|---|---|---|---|
| WO | 2023123474 | A1 | 06 July 2023 | CN | 116868631 | A | 10 October 2023 |
| CN | 112788723 | A | 11 May 2021 | WO | 2021088591 | A1 | 14 May 2021 |
| | | | | EP | 4040853 | A1 | 10 August 2022 |
| | | | | US | 2022264484 | A1 | 18 August 2022 |
| CN | 115915007 | A | 04 April 2023 | | None | | |
| US | 2019150096 | A1 | 16 May 2019 | WO | 2017191919 | A1 | 09 November 2017 |
| US | 2021136641 | A1 | 06 May 2021 | CN | 112788683 | A | 11 May 2021 |
| US | 2022174610 | A1 | 02 June 2022 | WO | 2021031875 | A1 | 25 February 2021 |
| | | | | CN | 112399541 | A | 23 February 2021 |

Form PCT/ISA/210 (patent family annex) (July 2022)